(19) Europäisches Patentamt

European Patent Office

Office européen des brevets

(11) **EP 4 607 151 A1**

(12) **EUROPEAN PATENT APPLICATION**
published in accordance with Art. 153(4) EPC

(43) Date of publication:
**27.08.2025  Bulletin 2025/35**

(21) Application number: **22963876.2**

(22) Date of filing: **02.11.2022**

(51) International Patent Classification (IPC):
***G01C 21/34*** (2006.01)

(52) Cooperative Patent Classification (CPC):
**G01C 21/34**

(86) International application number:
**PCT/CN2022/129294**

(87) International publication number:
**WO 2024/092559 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• **DING, Ran
Shenzhen, Guangdong 518129 (CN)**

• **ZHAO, Xiao
Shenzhen, Guangdong 518129 (CN)**
• **LIU, Qiangbo
Shenzhen, Guangdong 518129 (CN)**
• **DAI, Qizhu
Shenzhen, Guangdong 518129 (CN)**
• **HUANG, Mengmeng
Shenzhen, Guangdong 518129 (CN)**

(74) Representative: **Gill Jennings & Every LLP
The Broadgate Tower
20 Primrose Street
London EC2A 2ES (GB)**

(54) **NAVIGATION METHOD AND CORRESPONDING DEVICE**

(57)     A navigation method includes: obtaining a driving image and a pose of a vehicle at a first moment, and a standard definition map used for navigation (301); mapping a target element and a vector direction of a road on the standard definition map into a vehicle body coordinate system of the vehicle, where the target element includes a lane line or a road edge in the driving image (302); and constructing a lane-level navigation map at the first moment based on the vector direction of the road, the target element, the pose of the vehicle at the first moment, and a pose of the vehicle at a second moment, where the second moment is earlier than the first moment, and the lane-level navigation map is used to provide a lane-level navigation service for a user (303). The lane-level navigation service can be provided for the user by using a standard SD map without requiring a high-precision sensor and too much computing power.

```
Obtain a driving image and a pose of a vehicle at a first moment, and a
standard definition map used for navigation                              ⟍ 301

                                    ↓

Map a target element and a vector direction of a road on the standard
definition map into a vehicle body coordinate system of the vehicle, where the
target element includes a lane line or a road edge in the driving image   ⟍ 302

                                    ↓

Construct a lane-level navigation map at the first moment based on the vector
direction of the road, the target element, the pose of the vehicle at the first
moment, and a pose of the vehicle at a second moment, where the second
moment is earlier than the first moment, and the lane-level navigation map is
used to provide a lane-level navigation service for a user                 ⟍ 303
```

FIG. 3

EP 4 607 151 A1

**Description**

## TECHNICAL FIELD

This application relates to the field of navigation technologies, and specifically, to a navigation method and a corresponding apparatus.

## BACKGROUND

With rapid development of urban roads in recent years, many road sections are of multi-lane. Conventional road-level navigation based on a standard definition (standard definition, SD) map cannot provide good driving experience, and urgently needs to be upgraded to lane-level navigation.

A navigate on pilot (navigate on pilot, NOP) system of current lane-level navigation needs to rely on a high-precision (high-precision, HD) map for high-precision positioning. Generally, vehicles are required to have high-precision sensors and strong computing power to provide lane-level positioning and navigation services.

Currently, the HD map is characterized by high costs, limited coverage, and high requirements on vehicles. Therefore, how to provide the lane-level navigation service at relatively low costs becomes an urgent problem to be resolved.

## SUMMARY

This application provides a navigation method, used to provide a lane-level navigation service by using a standard definition map. This application further provides a corresponding apparatus, a computer-readable storage medium, a computer program product, and the like.

A first aspect of this application provides a navigation method, including: obtaining a driving image and a pose of a vehicle at a first moment, and a standard definition map used for navigation; mapping a target element and a vector direction of a road on the standard definition map into a vehicle body coordinate system of the vehicle, where the target element includes a lane line or a road edge in the driving image; and constructing a lane-level navigation map at the first moment in the vehicle body coordinate system of the vehicle based on the vector direction of the road, the target element, the pose of the vehicle at the first moment, and a pose of the vehicle at a second moment, where the second moment is earlier than the first moment, and the lane-level navigation map is used to provide a lane-level navigation service for a user.

The navigation method in this application may be performed by using a client. The client may be a terminal device, or may be an application. For example, the application runs on a terminal device to provide the navigation service for the user. The terminal device may be a vehicle-mounted terminal or a handheld terminal. The vehicle-mounted terminal may include a head-up display (head-up display, HUD) apparatus. Certainly, the terminal device may alternatively be a vehicle or another transportation means that needs to be navigated.

In this application, the first moment and the second moment are different time points in a navigation process. The second moment and the first moment may be time points corresponding to two consecutive frames of driving images shot by a camera, or may be time points corresponding to two inconsecutive frames of driving images. The camera configured to shoot a driving image may be a vehicle-mounted camera, or may be a camera of a handheld terminal.

In this application, the pose of the vehicle is a location and a posture of the vehicle, for example, coordinates and an azimuth of the vehicle. The pose of the vehicle may be obtained based on latitude and longitude data of the global navigation satellite system (global navigation satellite system, GNSS) and data measured by an inertial measurement unit (inertial measurement unit, IMU). Certainly, in this application, data of a wheel speed sensor (wheel speed sensor, WSS) may be further introduced when the pose of the vehicle is determined. This is not limited in this application.

In this application, the standard definition (standard definition, SD) map is a map that provides road guidance in the navigation process, and cannot provide lane-level guidance. The vector direction of the road on the standard definition map means that a road on the standard definition map is expressed by using points, and each point has a value and a direction. The standard definition map may also provide a quantity of lanes. The vector direction of the road may be switched from a global coordinate system to the vehicle body coordinate system through vehicle dead-reckoning (vehicle dead-reckoning, VDR).

In this application, the target element is lane-related information such as a lane line or a road edge extracted from a driving image, and the target element may be mapped into the vehicle body coordinate system through inverse perspective mapping (inverse perspective mapping, IPM).

Mapping both the vector direction of the road and the target element into bird's-eye view space of the vehicle body coordinate system of the pose of the vehicle may be understood as a fusion process of heterogeneous data. In the fusion process, fusion may be performed from a bird's-eye view (bird-eye view, BEV) angle of the vehicle. The bird's-eye view angle may be understood as a top view angle. Certainly, fusion may alternatively be performed from another view angle, for example, a front view angle of the vehicle. Data from different view angles may be mutually converted.

According to the solution provided in this application, in the navigation process, the lane-level navigation map may be constructed based on the SD map, and the lane-level navigation service can be obtained without a high-precision (High-precision, HD) map, a high-precision sensor, and excessive computing power. In this way, a high-quality navigation service can be provided for the user at relatively low costs.

In a possible implementation, the foregoing step of constructing a lane-level navigation map at the first moment based on the vector direction of the road, the target element, the pose of the vehicle at the first moment, and a pose of the vehicle at a second moment includes: constructing the lane-level navigation map at the first moment based on a lane-level navigation map at the second moment and a frame estimation result at the first moment, where the frame estimation result at the first moment indicates a confidence of the driving image at the first moment.

In this possible implementation, a lane-level navigation map of a current frame may be determined based on a historical lane-level navigation map and a frame estimation result of the current frame, thereby improving efficiency of generating the lane-level navigation map.

In a possible implementation, the frame estimation result at the first moment is obtained by using a target relational expression, and the target relational expression includes a product of a first weight and the vector direction of the road, a product of a second weight and inter-frame motion information, and a product result of a third weight and a parameter value of the target element.

The target relational expression may be expressed as follows:

$$L(p_t) = W_{navi}V_t + W_{vdr}B(pos_t, pos_{t-1}, L(p_{t-1})) + W_{de}I\left(\sum_i^j p_t\right)$$

Herein, $L(p_t)$ represents the frame estimation result at the first moment, $W_{navi}$ represents the first weight, $V_t$ represents the vector direction of the road, $W_{vdr}$ represents the second weight, $B$ represents the inter-frame motion information, $pos_t$ represents the pose of the vehicle at the first moment, $pos_{t-1}$ represents the pose of the vehicle at the second moment, $L(p_{t-1})$ represents the frame estimation result at the second moment, $W_{de}$ represents the third weight, and $I\left(\sum_i^j p_t\right)$ represents an IPM result of $i^{th}$ to $j^{th}$ target elements in an image frame at the first moment.

In this possible implementation, the frame estimation result at the first moment can be quickly and accurately obtained by using the foregoing target relational expression, thereby increasing a speed of generating the lane-level navigation map.

In a possible implementation, the inter-frame motion information is a result obtained by projecting a frame estimation result at the second moment to the first moment based on a variation between the pose of the vehicle at the first moment and the pose of the vehicle at the second moment.

In this application, the frame estimation result at the second moment indicates a confidence of a driving image at the second moment.

In this possible implementation, the frame estimation result at the first moment can be quickly obtained by performing projection based on a frame estimation result at a historical moment.

In a possible implementation, before the constructing a lane-level navigation map at the first moment, the method further includes: updating at least one of the first weight, the second weight, or the third weight based on an error estimation result, where the error estimation result is a difference estimation result between the target element in the driving image at the first moment and the target element in the driving image at the second moment, or the error estimation result is a difference estimation result between the frame estimation result at the first moment and the frame estimation result at the second moment.

In this possible implementation, before the lane-level navigation map at the first moment is generated, a corresponding weight may be adjusted based on the error estimation result. In this way, accuracy of the lane-level navigation map at the first moment can be improved.

In a possible implementation, the third weight is reduced if the error estimation result indicates that a similarity between the target element in the driving image at the first moment and the target element in the driving image at the second moment is less than a first threshold.

In this possible implementation, the similarity between the target elements at the two moments may be determined by comparing the target element in the driving image at the first moment with the target element in the driving image at the second moment. If the similarity is greater than the first threshold, it indicates that the target elements in the driving images at the two moments are highly similar. Because the two moments are usually relatively close, a relatively high similarity indicates that a sensing module that extracts a target element from a driving image works normally. If the similarity is less than the first threshold, it indicates that the similarity between the target elements in the driving images at the two moments is relatively low, and the sensing module may have mis-detection and missing detection. In this case, the reliability of the target element in the driving image at the first moment is relatively low. The corresponding third weight needs to be reduced, and the frame estimation result at the second moment is more maintained.

In a possible implementation, the third weight is increased if the error estimation result indicates that a similarity between the frame estimation result at the first moment and the frame estimation result at the second moment is less than a second threshold.

In this possible implementation, if the similarity between the frame estimation results at the two moments is relatively small, it indicates that a possible lane change may occur at the first moment relative to the second moment. In this case, information in the driving image at the first moment should be used as much as possible. Therefore, the third weight needs to be increased, to improve accuracy of the lane-level navigation map.

In a possible implementation, the method further includes: correcting, based on the frame estimation result at the first moment and an orientation parameter and a width of a lane in which the vehicle is located, a location parameter of a lane line of another lane in the same orientation on the lane-level navigation map at the first moment.

In this possible implementation, the orientation parameter of the lane may include an included angle, a lane line offset, and a lane line curvature. The included angle may be an included angle between a vehicle head orientation and a lane line orientation, or may be described as an included angle of the lane line relative to an axis in the vehicle body coordinate system. The lane line offset is an offset between the lane line and an origin of a vehicle system. The frame estimation result at the first moment is used for determining whether to correct a location parameter of a lane line. The frame estimation result represents reliability that is of a prediction result and that is determined based on the target element, the pose of the vehicle, and the vector direction of the road on the SD map. If the reliability is very low and the prediction result has no value for use, the lane line does not need to be corrected. If the frame estimation result at the first moment is relatively appropriate, a lane in which the vehicle is located is usually a clearest lane in the driving image. Therefore, the location parameter of the lane line of the another lane in the same orientation on the navigation map can be corrected based on the orientation parameter and the width of the lane line of the lane in which the vehicle is located. In this way, this helps provide accurate navigation guidance.

In a possible implementation, the method further includes: performing semantic merging based on the lane in which the vehicle is located on the lane-level navigation map at the first moment and navigation information input by the user on the standard definition map, to output a lane-level navigation guidance prompt, where the lane-level navigation guidance prompt includes lane keeping, lane changing to the left, or lane changing to the right.

In this possible implementation, the navigation information may include a navigation destination and a quantity of lanes of a road on which the vehicle is currently located. Semantic merging means a process of directly providing clear navigation guidance with no need of performing conversion again by the user. For example, entering two lanes on a left side in an SD map navigation scenario is merged into lane keeping or lane changing to the left, and entering a lane on a right side in the SD map navigation scenario is merged into lane keeping or lane changing to the right. In this way, the user can perform a corresponding operation based on the lane-level navigation guidance prompt, and the user does not need to observe the lane in which the user is currently located and then determine whether to perform a lane change operation. It can be learned that navigation efficiency can be improved in the solutions provided in this application.

In a possible implementation, the lane-level navigation guidance prompt is lane keeping if it is determined, based on the lane in which the vehicle is located and the navigation information, that the vehicle needs to keep going straight, that the vehicle is already located on a leftmost lane in a scenario in which the vehicle needs to make a U-turn or turn left, or that the vehicle is already located on a rightmost lane in a scenario in which the vehicle needs to turn right.

In a possible implementation, the lane-level navigation guidance prompt is lane changing to the left, or lane changing to the right if it is determined, based on the lane in which the vehicle is located and the navigation information, that the vehicle needs to make a lane change.

In a possible implementation, the method further includes: when the lane in which the vehicle is located cannot be determined based on the driving image at the first moment, determining, based on a lane in which the vehicle is located in a driving image at a third moment and a driving behavior from the third moment to the first moment, the lane in which the vehicle is located at the first moment, where the third moment is earlier than the first moment, a distance between the third moment and the first moment is less than a third threshold, and a frame estimation result at the third moment is an estimation result with highest reliability in driving images generated from the third moment to the first moment.

In this possible implementation, during navigation guidance, the lane in which the vehicle is currently located needs to be positioned. If the lane in which the vehicle is currently located cannot be determined in the driving image at the first moment, for example, in an intersection scenario or a congestion scenario, the lane in which the vehicle is currently located cannot be determined due to blocking of vehicles on two sides or blocking of front and rear vehicles. In this case, a historical driving image may be queried (the lane in which the vehicle is located may be determined), and the lane in which the vehicle is located at the first moment may be determined with reference to a driving behavior of the vehicle between the first moment and the third moment at which the historical driving image is generated. In this way, lane-level navigation guidance in a complex scenario can be satisfied.

In a possible implementation, the method further includes: in a navigation process, adjusting, based on multi-dimensional parameters, a pose of a virtual arrow used to indicate a navigation direction, where the multi-dimensional parameters include at least two of an orientation angle, a roll angle, a vehicle system horizontal offset, or a vehicle system vertical offset.

In this possible implementation, the pose of the virtual arrow used to indicate the navigation direction may be multi-dimensional, and such a virtual arrow is more flexible during navigation.

In a possible implementation, in the navigation process, the orientation of the virtual arrow is consistent with the orientation of the lane.

In this possible implementation, the orientation of the virtual arrow is consistent with the orientation of the lane, which better satisfies a driving requirement of the user.

A second aspect of this application provides a navigation method, including: responding to a tap operation of a user on a first button on a standard definition map used for navigation, and starting a camera, where the camera is configured to shoot a driving image, and the first button is an entry used to start a lane-level navigation service; mapping a target element and a vector direction of a road on the standard definition map into a vehicle body coordinate system of the vehicle, where the target element includes a lane line or a road edge in a driving image at a first moment; constructing a lane-level navigation map at the first moment based on the vector direction of the road, the target element, a pose of the vehicle at the first moment, and a pose of the vehicle at a second moment, where the second moment is earlier than the first moment; and displaying the lane-level navigation map, where the lane-level navigation map is used to provide the lane-level navigation service for the user.

In the second aspect, on a navigation interface of the standard definition map, generation of the lane-level navigation map may be started by tapping the entry used to start the lane-level navigation service, to obtain the lane-level navigation map to navigate the user. The lane-level navigation service can be obtained without an HD map, a high-precision sensor, and excessive computing power. In this way, a high-quality navigation service can be provided for the user at relatively low costs.

In a possible implementation, the method further includes:

responding to a switch operation of the user on a view angle button on the lane-level navigation map, and switching from a lane-level navigation map of a first view angle to a lane-level navigation map of a second view angle, where the first view angle includes a top view angle of the vehicle or a front view angle of the vehicle, the second view angle includes the front view angle of the vehicle or the top view angle of the vehicle, and the first view angle is different from the second view angle.

In this possible implementation, the user may switch between the top view angle and the front view angle. Certainly, another view angle may be further included. The user may switch between different view angles according to a requirement, for example, a left view angle, a right view angle, and a rear view angle, to display lane-level navigation maps of different view angles.

In a possible implementation, the method further includes: responding to a switch operation of the user on a navigation guidance mode on the lane-level navigation map, and switching from a first navigation guidance mode to a second navigation guidance mode, where the first navigation guidance mode includes a mode of enhancing lane rendering of a travel lane or a mode of rendering a guide arrow on a travel lane, and the first navigation guidance mode is different from the second navigation guidance mode.

In this possible implementation, the user may select a corresponding guidance mode according to a preference, thereby enhancing loyalty of the user.

In a possible implementation, the method further includes: responding to a control operation of the user on an information button on the lane-level navigation map, and closing a navigation guidance prompt on the lane-level navigation map, or displaying a navigation guidance prompt on the lane-level navigation map, where the navigation guidance prompt includes lane keeping, lane changing to the left, lane changing to the right, an intersection indication, or an alarm indication.

In this possible implementation, the user may choose, according to a preference, to enable or disable the navigation guidance prompt, thereby satisfying a personalized requirement of the user.

A third aspect of this application provides a navigation apparatus, including:

an obtaining unit, configured to obtain a driving image and a pose of a vehicle at a first moment, and a standard definition map used for navigation;
a first processing unit, configured to map a target element and a vector direction of a road on the standard definition map into a vehicle body coordinate system of the vehicle, where the target element includes a lane line or a road edge in the driving image; and
a second processing unit, configured to construct a lane-level navigation map at the first moment based on the vector direction of the road, the target element, the pose of the vehicle at the first moment, and a pose of the vehicle at a second moment, where the second moment is earlier than the first moment, and the lane-level navigation map is used to provide a lane-level navigation service for a user.

In a possible implementation, the second processing unit is specifically configured to construct the lane-level navigation map at the first moment based on a lane-level navigation map at the second moment and a frame estimation result at the first moment, where the frame estimation result at the first moment indicates a confidence of the driving image at the first moment.

In a possible implementation, the frame estimation result at the first moment is obtained by using a target relational expression, and the target relational expression includes a product of a first weight and the vector direction of the road, a product of a second weight and inter-frame motion information, and a product result of a third weight and a parameter value of the target element.

In a possible implementation, the inter-frame motion information is a result obtained by projecting a frame estimation result at the second moment to the first moment based on a variation between the pose of the vehicle at the first moment and the pose of the vehicle at the second moment.

In a possible implementation, the second processing unit is further configured to: before the lane-level navigation map at the first moment is constructed, update at least one of the first weight, the second weight, or the third weight based on an error estimation result, where the error estimation result is a difference estimation result between the target element in the driving image at the first moment and the target element in the driving image at the second moment, or the error estimation result is a difference estimation result between the frame estimation result at the first moment and the frame estimation result at the second moment.

In a possible implementation, the third weight is reduced if the error estimation result indicates that a similarity between the target element in the driving image at the first moment and the target element in the driving image at the second moment is less than a first threshold.

In a possible implementation, the third weight is increased if the error estimation result indicates that a similarity between the frame estimation result at the first moment and the frame estimation result at the second moment is less than a second threshold.

In a possible implementation, the second processing unit is further configured to correct, based on the frame estimation result at the first moment and an orientation parameter and a width of a lane in which the vehicle is located, a location parameter of a lane line of another lane in the same orientation on the lane-level navigation map at the first moment.

In a possible implementation, the second processing unit is further configured to: perform semantic merging based on the lane in which the vehicle is located on the lane-level navigation map at the first moment and navigation information input by the user on the standard definition map, to output a lane-level navigation guidance prompt, where the lane-level navigation guidance prompt includes lane keeping, lane changing to the left, or lane changing to the right.

In a possible implementation, the lane-level navigation guidance prompt is lane keeping if it is determined, based on the lane in which the vehicle is located and the navigation information, that the vehicle needs to keep going straight, that the vehicle is already located on a leftmost lane in a scenario in which the vehicle needs to make a U-turn or turn left, or that the vehicle is already located on a rightmost lane in a scenario in which the vehicle needs to turn right.

In a possible implementation, the lane-level navigation guidance prompt is lane changing to the left, or lane changing to the right if it is determined, based on the lane in which the vehicle is located and the navigation information, that the vehicle needs to make a lane change.

In a possible implementation, the second processing unit is further configured to: when the lane in which the vehicle is located cannot be determined based on the driving image at the first moment, determine, based on a lane in which the vehicle is located in a driving image at a third moment and a driving behavior from the third moment to the first moment, the lane in which the vehicle is located at the first moment, where the third moment is earlier than the first moment, a distance between the third moment and the first moment is less than a third threshold, and a frame estimation result at the third moment is an estimation result with highest reliability in driving images generated from the third moment to the first moment.

In a possible implementation, the second processing unit is further configured to: in a navigation process, adjust, based on multi-dimensional parameters, a pose of a virtual arrow used to indicate a navigation direction, where the multi-dimensional parameters include at least two of an orientation angle, a roll angle, a vehicle system horizontal offset, or a vehicle system vertical offset.

In a possible implementation, in the navigation process, the orientation of the virtual arrow is consistent with the orientation of the lane.

A fourth aspect of this application provides a navigation apparatus, including:

a first processing unit, configured to: respond to a tap operation of a user on a first button on a standard definition map used for navigation, and start a camera, where the camera is configured to shoot a driving image, and the first button is an entry used to start a lane-level navigation service;
a second processing unit, configured to map a target element and a vector direction of a road on the standard definition map into a vehicle body coordinate system of the vehicle, where the target element includes a lane line or a road edge in a driving image at a first moment;

a third processing unit, configured to construct a lane-level navigation map at the first moment based on the vector direction of the road, the target element, a pose of the vehicle at the first moment, and a pose of the vehicle at a second moment, where the second moment is earlier than the first moment; and

a display unit, configured to display the lane-level navigation map, where the lane-level navigation map is used to provide the lane-level navigation service for the user.

In a possible implementation, the first processing unit is further configured to: respond to a switch operation of the user on a view angle button on the lane-level navigation map, and switch from a lane-level navigation map of a first view angle to a lane-level navigation map of a second view angle, where the first view angle includes a top view angle of the vehicle or a front view angle of the vehicle, the second view angle includes the front view angle of the vehicle or the top view angle of the vehicle, and the first view angle is different from the second view angle.

In a possible implementation, the first processing unit is further configured to: respond to a switch operation of the user on a navigation guidance mode on the lane-level navigation map, and switch from a first navigation guidance mode to a second navigation guidance mode, where the first navigation guidance mode includes a mode of enhancing lane rendering of a travel lane or a mode of rendering a guide arrow on a travel lane, and the first navigation guidance mode is different from the second navigation guidance mode.

In a possible implementation, the first processing unit is further configured to: respond to a control operation of the user on an information button on the lane-level navigation map, and close a navigation guidance prompt on the lane-level navigation map, or display a navigation guidance prompt on the lane-level navigation map, where the navigation guidance prompt includes lane keeping, lane changing to the left, lane changing to the right, an intersection indication, or an alarm indication.

A fifth aspect of this application provides a client, configured to perform the method according to the first aspect or any possible implementation of the first aspect. Specifically, the client includes modules or units configured to perform the method in the first aspect or any possible implementation of the first aspect, for example, an obtaining unit, a first processing unit, and a second processing unit.

A sixth aspect of this application provides a client, configured to perform the method according to the second aspect or any possible implementation of the second aspect. Specifically, the client includes modules or units configured to perform the method in the second aspect or any possible implementation of the second aspect, for example, a first processing unit, a second processing unit, a third processing unit, and a display unit.

A seventh aspect of this application provides a client, including a transceiver, a processor, and a memory. The transceiver and the processor are coupled to the memory. The memory is configured to store a program or instructions. When the processor executes the program or the instructions, the client is enabled to perform the method according to the first aspect or any possible implementation of the first aspect.

An eighth aspect of this application provides a client, including a transceiver, a processor, and a memory. The transceiver and the processor are coupled to the memory. The memory is configured to store a program or instructions. When the processor executes the program or the instructions, the client is enabled to perform the method according to the second aspect or any possible implementation of the second aspect.

A ninth aspect of this application provides a chip system. The chip system includes one or more interface circuits and one or more processors. The interface circuit is interconnected to the processor through a line. The interface circuit is configured to: receive a signal from a memory of a client, and send a signal to the processor, where the signal includes computer instructions stored in the memory. When the processor executes the computer instructions, the client performs the method according to the first aspect or any possible implementation of the first aspect.

A tenth aspect of this application provides a chip system. The chip system includes one or more interface circuits and one or more processors. The interface circuit is interconnected to the processor through a line. The interface circuit is configured to: receive a signal from a memory of a client, and send a signal to the processor, where the signal includes computer instructions stored in the memory. When the processor executes the computer instructions, the client performs the method according to the second aspect or any possible implementation of the second aspect.

An eleventh aspect of this application provides a computer-readable storage medium. The computer-readable storage medium stores a computer program or instructions. When the computer program or the instructions run on a computer device, the computer device is enabled to perform the method according to the first aspect or any possible implementation of the first aspect.

A twelfth aspect of this application provides a computer-readable storage medium. The computer-readable storage medium stores a computer program or instructions. When the computer program or the instructions run on a computer device, the computer device is enabled to perform the method according to the second aspect or any possible implementation of the second aspect.

A thirteenth aspect of this application provides a computer device program product. The computer device program product includes computer device program code. When a computer device executes the computer device program code, the computer device is enabled to perform the method according to the first aspect or any possible implementation of the first aspect.

A fourteenth aspect of this application provides a computer device program product. The computer device program product includes computer device program code. When a computer device executes the computer device program code, the computer device is enabled to perform the method according to the second aspect or any possible implementation of the second aspect.

A fifteenth aspect of this application provides a vehicle, including a camera, a sensor, and a vehicle-mounted terminal. The vehicle-mounted terminal is communicatively connected to the camera and the sensor. The camera is configured to shoot a driving image. The sensor is configured to collect data related to a pose of the vehicle. The vehicle-mounted terminal includes the client according to the third aspect or the fourth aspect, or includes the chip system according to the fifth aspect or the sixth aspect.

For technical effects brought by any possible implementation of the third aspect to the fifteenth aspect, refer to technical effects brought by the first aspect or different possible implementations of the first aspect or technical effects brought by the second aspect or different possible implementations of the second aspect. Details are not described herein again.

## BRIEF DESCRIPTION OF DRAWINGS

FIG. 1 is a diagram of a structure of a vehicle according to an embodiment of this application;
FIG. 2 is another diagram of a structure of a vehicle according to an embodiment of this application;
FIG. 3 is a diagram of an embodiment of a navigation method according to an embodiment of this application;
FIG. 4A is a standard definition map in a global coordinate system according to an embodiment of this application;
FIG. 4B and FIG. 4C are diagrams of examples of driving images according to an embodiment of this application;
FIG. 4D is a map in a vehicle body coordinate system according to an embodiment of this application;
FIG. 4E is a diagram of an example of a lane-level navigation map according to an embodiment of this application;
FIG. 4F is another diagram of an example of a lane-level navigation map according to an embodiment of this application;
FIG. 4G is another diagram of an example of a lane-level navigation map according to an embodiment of this application;
FIG. 5A is a diagram of an example of a lane orientation parameter according to an embodiment of this application;
FIG. 5B is a diagram of a lane line correction example according to an embodiment of this application;
FIG. 6A to FIG. 6D are diagrams of several navigation guidance examples according to an embodiment of this application;
FIG. 7 is a diagram of a lane positioning example according to an embodiment of this application;
FIG. 8A is a diagram of an example of lane-level navigation with a virtual arrow according to an embodiment of this application;
FIG. 8B is a diagram of curves of multi-dimensional outputs of a virtual arrow according to an embodiment of this application;
FIG. 9A is another diagram of an embodiment of a navigation method according to an embodiment of this application;
FIG. 9B is another diagram of an embodiment of a navigation method according to an embodiment of this application;
FIG. 10A is another diagram of an embodiment of a navigation method according to an embodiment of this application;
FIG. 10B is a diagram of an interface of a standard definition map according to an embodiment of this application;
FIG. 11 is a diagram of a structure of a navigation apparatus according to an embodiment of this application;
FIG. 12 is another diagram of a structure of a navigation apparatus according to an embodiment of this application;
FIG. 13 is a diagram of a structure of a vehicle according to an embodiment of this application; and
FIG. 14 is a diagram of a structure of a chip according to an embodiment of this application.

## DESCRIPTION OF EMBODIMENTS

The following describes embodiments of this application with reference to the accompanying drawings. It is clear that the described embodiments are merely some rather than all of embodiments of this application. A person of ordinary skill in the art may learn that, with development of technologies and emergence of new scenarios, technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that data termed in such a way are interchangeable in appropriate circumstances so that embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

Embodiments of this application provide a navigation method, used to provide lane-level navigation by using a standard definition map. This application further provides a corresponding apparatus, a computer-readable storage medium, a computer program product, and the like. Details are separately described below.

The navigation method provided in embodiments of this application may be performed by using a client. The client may be a terminal device, or may be an application. For example, the application runs on a terminal device to provide a navigation service for a user. The terminal device may be a vehicle-mounted terminal or a handheld terminal. The vehicle-mounted terminal may include a head-up display (head-up display, HUD) apparatus. Certainly, the terminal device may alternatively be a vehicle or another transportation means that needs to be navigated.

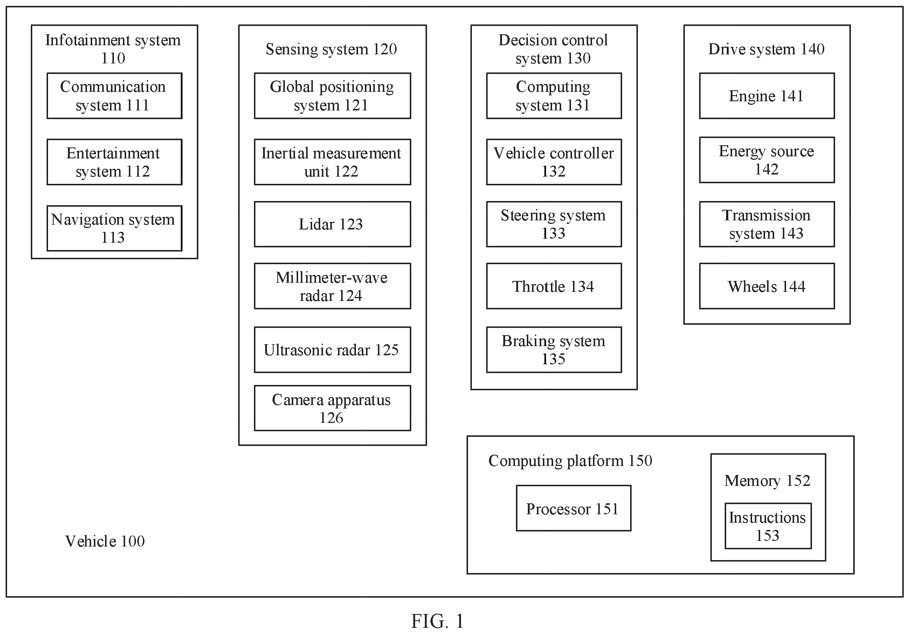

For ease of understanding of this solution, in an embodiment of this application, a structure of a vehicle provided in this application is first described with reference to FIG. 1. Refer to FIG. 1. FIG. 1 is a diagram of a structure of a vehicle according to an embodiment of this application. FIG. 1 is a functional block diagram of a vehicle 100 according to an embodiment of this application. The vehicle 100 may be configured to be in an autonomous driving mode or a human-vehicle co-navigation mode. For example, the vehicle 100 may obtain surrounding environment information of the vehicle by using a sensing system 120, and obtain a navigation policy based on analysis of the surrounding environment information, to implement full autonomous driving or present a lane-level map used for navigation to a user to implement human-vehicle co-navigation.

The vehicle 100 may include various subsystems, such as an infotainment system 110, the sensing system 120, a decision control system 130, a drive system 140, and a computing platform 150. Optionally, the vehicle 100 may include more or fewer subsystems, and each subsystem may include a plurality of components. In addition, all subsystems and components of the vehicle 100 may be interconnected in a wired or wireless manner.

In some embodiments, the infotainment system 110 may include a communication system 111, an entertainment system 112, and a navigation system 113.

The communication system 111 may include a wireless communication system 111. The wireless communication system 111 may perform wireless communication with one or more devices directly or through a communication network. For example, the wireless communication system 111 may use 3G cellular communication, such as CDMA, EVDO, GSM/GPRS, or 4G cellular communication, such as LTE, or 5G cellular communication. The wireless communication system 111 may communicate with a wireless local area network (wireless local area network, WLAN) through Wi-Fi. In some embodiments, the wireless communication system 146 may directly communicate with a device through an infrared link, Bluetooth, or ZigBee. The wireless communication system 111 may include one or more dedicated short-range communication (dedicated short-range communication, DSRC) devices, and these devices may include public and/or private data communication between the vehicles and/or roadside stations.

The entertainment system 112 may include a central control screen, a microphone, and a sounder. The user may listen to the radio and play music in the vehicle based on the entertainment system 112. Alternatively, a mobile phone is connected to the vehicle, and screen projection of the mobile phone is implemented on the central control screen. The central control screen may be a touchscreen, and the user may perform an operation by touching the screen. In some cases, a voice signal of the user may be obtained by using a microphone, and some control performed by the user on the vehicle 100 is implemented based on analysis of the voice signal of the user, for example, a temperature inside the vehicle is adjusted. In other cases, music may be played to the user by using a sounder.

The navigation system 113 may include a map service provided by a map provider, to provide navigation of a travel route for the vehicle 100, and the navigation system 113 may be used together with a global positioning system 121 and an inertial measurement unit 122 of the vehicle. The map service provided by the map provider may be a standard definition (standard definition, SD) map. According to the solution provided in this application, in a navigation process, a local lane-level navigation map may be generated based on an SD map and data measured by the sensing system 120, to provide a lane-level navigation service for the user.

The sensing system 120 may include several types of sensors that sense the surrounding environment information of the vehicle 100. For example, the sensing system 120 may include the global positioning system 121 (the global positioning system may be a GPS system, or may be a BeiDou system or another positioning system), the inertial measurement unit (inertial measurement unit, IMU) 122, a lidar 123, a millimeter-wave radar 124, an ultrasonic radar 125, and a camera apparatus 126. The sensing system 120 may further include sensors (for example, an in-vehicle air quality monitor, a fuel gauge, and an oil temperature gauge) of an internal system of the vehicle 100 that is monitored. Sensor data from one or more of these sensors can be used to detect an object and corresponding features (a location, a shape, a direction, a speed, and the like) of the object. Such detection and recognition are key functions for safe operation of the vehicle 100.

The global positioning system 121 may be configured to determine a geographical location of the vehicle 100.

The inertial measurement unit 122 is configured to sense a location and an orientation change of the vehicle 100 based on an inertial acceleration. In some embodiments, the inertial measurement unit 122 may be a combination of an accelerometer and a gyroscope.

The lidar 123 may sense, by using a laser, an object in an environment in which the vehicle 100 is located. In some embodiments, the lidar 123 may include one or more laser sources, a laser scanner, one or more detectors, and another system component.

The millimeter-wave radar 124 may sense an object in an ambient environment of the vehicle 100 by using a radio signal. In some embodiments, in addition to sensing the object, the millimeter-wave radar 124 may be further configured to sense a speed and/or a moving direction of the object.

The ultrasonic radar 125 may sense an object around the vehicle 100 by using an ultrasonic signal.

The camera apparatus 126 may be configured to capture image information of the ambient environment of the vehicle 100. The camera apparatus 126 may include a monocular camera, a binocular camera, a structured light camera, a panoramic camera, and the like. The image information obtained by the camera apparatus 126 may include static image information, and may further include video stream information.

The decision control system 130 includes a computing system 131 that performs analysis and decision-making based on information obtained by the sensing system 120. The decision control system 130 further includes a vehicle controller 132 that controls a power system of the vehicle 100, and a steering system 133, a throttle 134, and a braking system 135 that are configured to control the vehicle 100.

The computing system 131 may process and analyze various information obtained by the sensing system 120 to recognize a target, an object, and/or a feature in the ambient environment of the vehicle 100. The target may include a pedestrian or an animal, and the object and/or the feature may include a traffic signal, a road boundary, and an obstacle. The computing system 131 may use technologies such as an object recognition algorithm, a structure from motion (Structure from Motion, SFM) algorithm, and video tracking. In some embodiments, the computing system 131 may be configured to: draw a map for an environment, track an object, estimate a speed of the object, and so on. The computing system 131 may analyze the various obtained information and obtain a control policy for the vehicle.

The vehicle controller 132 may be configured to coordinate and control a power battery and an engine 141 of the vehicle, to improve power performance of the vehicle 100.

The steering system 133 may be configured to adjust a moving direction of the vehicle 100. For example, in an embodiment, the steering system may be a steering wheel system.

The throttle 134 is configured to control an operating speed of the engine 141 and further control a speed of the vehicle 100.

The braking system 135 is configured to control the vehicle 100 to decelerate. The braking system 135 may use friction to reduce a rotational speed of wheels 144. In some embodiments, the braking system 135 may convert kinetic energy of the wheels 144 into a current. The braking system 135 may alternatively reduce a rotational speed of the wheels 144 in another manner, to control the speed of the vehicle 100.

The drive system 140 includes a component that provides power for the vehicle 100 to move. In an embodiment, the drive system 140 may include the engine 141, an energy source 142, a transmission system 143, and the wheels 144. The engine 141 may be an internal combustion engine, an electric motor, an air compression engine, or a combination of other types of engines, for example, a hybrid engine including a gasoline engine and an electric motor, or a hybrid engine including an internal combustion engine and an air compression engine. The engine 141 converts the energy source 142 into mechanical energy.

Examples of the energy source 142 include gasoline, diesel, another petroleum-based fuel, propane, another compressed gas-based fuel, anhydrous alcohol, a solar panel, a battery, and another power source. The energy source 142 may also provide energy for another system of the vehicle 100.

The transmission system 143 may transfer mechanical power from the engine 141 to the wheels 144. The transmission system 143 may include a gearbox, a differential, and a drive shaft. In an embodiment, the transmission system 143 may further include another component, for example, a clutch. The drive shaft may include one or more shafts that may be coupled to one or more wheels 144.

Some or all functions of the vehicle 100 are controlled by the computing platform 150. The computing platform 150 may include at least one processor 151. The processor 151 may execute instructions 153 stored in a non-transitory computer-readable medium such as a memory 152. In some embodiments, the computing platform 150 may alternatively be a plurality of computing devices that control individual components or subsystems of the vehicle 100 in a distributed manner.

The processor 151 may be any conventional processor such as a commercially available CPU. Alternatively, the processor 151 may further include a graphics processing unit (graphics processing unit, GPU), a field programmable gate array (field programmable gate array, FPGA), a system-on-a-chip (system-on-a-chip, SOC), an application-specific integrated circuit (application-specific integrated circuit, ASIC), or a combination thereof. The processor 151 may be located on a device far away from the vehicle and perform wireless communication with the vehicle.

In some embodiments, the memory 152 may include instructions 153 (for example, program logic), and the instructions 153 may be executed by the processor 151 to perform various functions of the vehicle 100. The memory 152 may also include additional instructions, including instructions used to send data to, receive data from, interact with, and/or control one or more of the infotainment system 110, the sensing system 120, the decision control system 130, and the drive system 140.

In addition to the instructions 153, the memory 152 may further store data, such as a road map, route information, a location, a direction, a speed, and other similar vehicle data of the vehicle, and other information. Such information may be used by the vehicle 100 and the computing platform 150 during operation of the vehicle 100 in an autonomous mode, a semi-autonomous mode, and/or a manual mode.

The computing platform 150 may control the functions of the vehicle 100 based on inputs received from various subsystems (for example, the drive system 140, the sensing system 120, and the decision control system 130). For example, the computing platform 150 may use an input from the decision control system 130 to control the steering system 133 to avoid an obstacle detected by the sensing system 120. In some embodiments, the computing platform 150 may operate to control many aspects of the vehicle 100 and the subsystems of the vehicle.

Optionally, one or more of the foregoing components may be separately installed from or associated with the vehicle 100. For example, the memory 152 may be partially or completely separated from the vehicle 100. The foregoing components may be communicatively coupled together in a wired and/or wireless manner.

Optionally, the foregoing components are merely examples. During actual application, components in the foregoing modules may be added or removed according to an actual requirement. FIG. 1 should not be construed as a limitation on embodiments of this application.

Optionally, in an autonomous driving mode, the vehicle 100 or a sensing and computing device (for example, the computing system 131 and the computing platform 150) associated with the vehicle 100 may predict a behavior of the recognized object based on the features of the recognized object and a state of the surrounding environment (for example, traffic, rain, and ice on the road). Optionally, all recognized objects depend on a behavior of each other. Therefore, all the recognized objects may be alternatively jointly considered to predict a behavior of a single recognized object. The vehicle 100 can adjust the speed of the vehicle based on the predicted behavior of the recognized object. In other words, the autonomous driving vehicle can determine, based on the predicted behavior of the object, a stable state to which the vehicle needs to be adjusted (for example, acceleration, deceleration, or stop). In this process, another factor may also be considered to determine the speed of the vehicle 100, for example, a lateral location of the vehicle 100 on a road on which the vehicle travels, a curvature of the road, and proximity between a static object and a dynamic object.

In addition to providing an instruction for adjusting the speed of the autonomous driving vehicle, the computing device may further provide an instruction for modifying a steering angle of the vehicle 100, so that the autonomous driving vehicle follows a given trajectory and/or maintains a safe lateral distance and a safe longitudinal distance from an object (for example, a car in an adjacent lane of the road) near the autonomous driving vehicle.

The vehicle 100 may be a car, a truck, a motorcycle, a bus, a boat, an airplane, a helicopter, a lawn mower, a recreational vehicle, a playground vehicle, a construction device, a trolley, a golf cart, a train, or the like. This is not specifically limited in embodiments of this application.

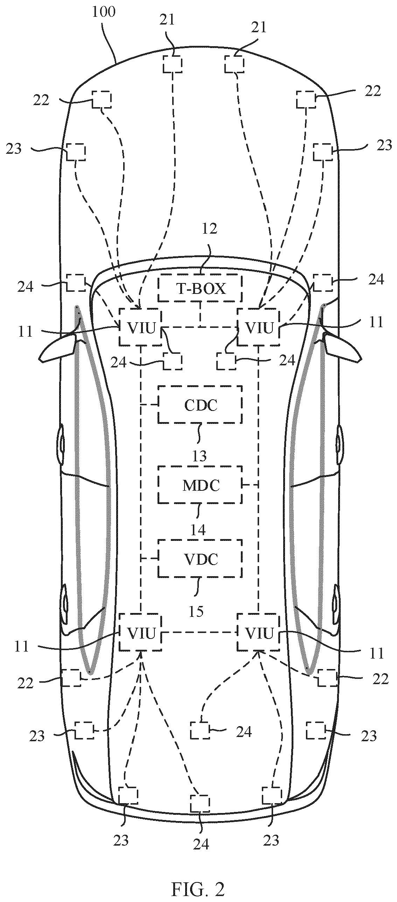

FIG. 2 is a diagram of a system architecture of the vehicle 100 according to some embodiments. The vehicle 100 includes a plurality of vehicle integration units (vehicle integration units, VIUs) 11, an Internet of vehicles device (telematic box, T-BOX) 12, a cockpit domain controller (cockpit domain controller, CDC), a mobile data center (mobile data center, MDC) 14, and a vehicle domain controller (vehicle domain controller, VDC) 15.

The vehicle 100 further includes a plurality of types of sensors disposed on the vehicle, including a lidar 21, a millimeter-wave radar 22, an ultrasonic radar 23, and a camera apparatus 24. Each type of sensor may include a plurality of sensors. It should be understood that, although FIG. 2 shows location layouts of different sensors on the vehicle 100, a quantity and a location layout of sensors in FIG. 2 are merely an example. A person skilled in the art may properly select a type, a quantity, and a location layout of the sensors according to a requirement.

FIG. 2 shows four VIUs. It should be understood that a quantity and locations of VIUs in FIG. 2 are merely examples. A person skilled in the art may select an appropriate quantity and locations of VIUs according to an actual requirement.

The vehicle integration unit VIU 11 provides, for a plurality of vehicle parts, some or all data processing functions or control functions required by the vehicle parts. The VIU may have one or more of the following functions.

    1. Electronic control function: This means that the VIU is configured to implement the electronic control functions provided by electronic control units (electronic control units, ECUs) inside some or all vehicle parts. For example, the VIU has a control function required by a vehicle part. For another example, the VIU has a data processing function required by a vehicle part.

    2. Function the same as that of a gateway: The VIU may further have some or all functions that are the same as those of the gateway, for example, a protocol conversion function, protocol encapsulation and forwarding functions, and a data format conversion function.

3. Function of processing data across vehicle parts: Processing, computation, and the like on data obtained from actuators of a plurality of vehicle parts are performed.

It should be noted that the data related in the foregoing functions may include running data of an actuator in a vehicle part, for example, a motion parameter of the actuator and an operating status of the actuator. The data related in the foregoing functions may also be data collected by using a data collection unit (for example, a sensitive element) of the vehicle part, for example, information about a road on which the vehicle travels or weather information that is collected by using the sensitive element of the vehicle. This is not specifically limited in embodiments of this application.

In the example of the vehicle 100 in FIG. 2, the vehicle 100 may be divided into a plurality of domains (domains), and each domain has an independent domain controller (domain controller). Specifically, in FIG. 2, two domain controllers are shown: a cockpit domain controller CDC 13 and a vehicle domain controller VDC 15.

The cockpit domain controller CDC 13 may be configured to implement function control of a cockpit area of the vehicle 100. Vehicle parts in the cockpit area may include a head-up display (head-up display, HUD), a dashboard, a radio, a central control screen, a navigation system, a camera, and the like.

The vehicle domain controller VDC 15 may be configured to coordinate and control the power battery and the engine 141 of the vehicle, to improve power performance of the vehicle 100. In some embodiments, the vehicle controller 132 in FIG. 1 may implement various functions of the VDC.

FIG. 2 further shows the Internet of vehicles device T-BOX 12 and the mobile data center MDC 13. The T-BOX 12 may be configured to implement communication connections between the vehicle 100 and internal and external devices of the vehicle. The T-BOX may obtain in-vehicle device data through a bus of the vehicle 100, or may be communicatively connected to a mobile phone of a user via a wireless network. In some embodiments, the T-BOX 12 may be included in the communication system 111 in FIG. 1. The mobile data center MDC 13 is configured to output execution control instructions such as driving, transmission, steering, and braking according to core control algorithms such as environment sensing and positioning, intelligent planning and decision making, and vehicle motion control, thereby implementing automatic control of the vehicle 100, and further implementing human-machine interaction of vehicle driving information through a human-machine interaction interface. In some embodiments, the computing platform 150 in FIG. 1 may implement various functions of the MDC 13.

Four VIUs 11 in FIG. 2 form a ring topology connection network, each VIU 11 is communicatively connected to a sensor at a nearby location of the VIU, and the T-BOX 12, the CDC 13, the MDC 14, and the VDC 15 are communicatively connected to the ring topology connection network of the VIU. The VIU 11 may obtain information from each sensor, and report the obtained information to the CDC 13, the MDC 14, and the VDC 15. The T-BOX 12, the CDC 13, the MDC 14, and the VDC 15 may communicate with each other via the ring topology network.

It should be understood that, the ring topology connection network connection is merely an example, and a person skilled in the art may select another appropriate VIU connection manner according to a requirement.

The connections between the VIUs may be implemented via, for example, an Ethernet (Ethernet). The connections between the VIUs and the T-BOX 12, the CDC 13, the MDC 14, and the VDC 15 may be implemented through, for example, an Ethernet or a peripheral component interconnect express (peripheral component interconnect express, PCIe) bus. The connections between the VIUs and the sensors may be implemented through, for example, a controller area network (controller area network, CAN), a local interconnect network (local interconnect network, LIN), FlexRay, and a media oriented systems transport (media oriented systems transport, MOST).

An AUTOSAR of the vehicle may be classified into an AP AUTOSAR and a CP AUTOSAR. The CP AUTOSAR may also be referred to as a classic AUTOSAR. The CP has been widely used in an embedded ECU of a conventional vehicle, and can satisfy a requirement of a scenario with a high requirement for functional safety and real-time performance but a low requirement for computing power, for example, an engine controller, and a brake controller. The AP is a new architecture that emerges to satisfy requirements of continuous connection and integration in complex scenarios such as a scenario with a high requirement for performance and a high requirement for computing power, autonomous driving, and cloudification of next-generation intelligent connected vehicles. In the future, the AP will be widely used in autonomous driving vehicles.

Certainly, the foregoing uses a structure of a vehicle as an example for description. Actually, a device configured to perform the navigation method provided in this application may be any device that can perform a navigation function, for example, a vehicle-mounted terminal on a vehicle, or a handheld terminal of a user, for example, a mobile phone or a tablet computer. Products in other possible forms are not described in embodiments of this application.

The following describes the navigation method provided in embodiments of this application by using a client as an execution entity.

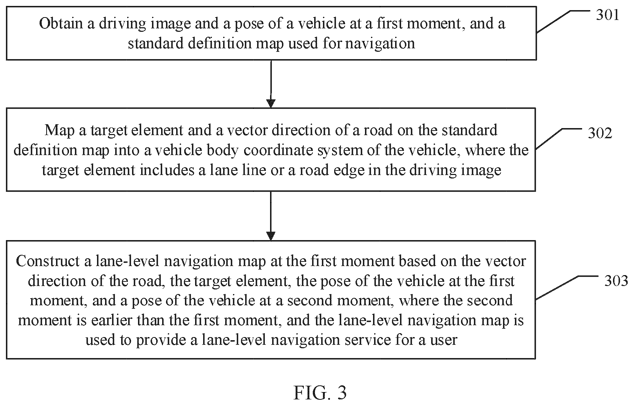

As shown in FIG. 3, an embodiment of the navigation method provided in embodiments of this application includes the following steps.

301: Obtain a driving image and a pose of a vehicle at a first moment, and a standard definition map used for navigation.

In this embodiment of this application, the pose of the vehicle is a location and a posture of the vehicle, for example, coordinates and an azimuth of the vehicle. The pose of the vehicle may be obtained based on latitude and longitude data of the global navigation satellite system (global navigation satellite system, GNSS) and data measured by an inertial measurement unit (inertial measurement unit, IMU). Certainly, in this application, data of a wheel speed sensor (wheel speed sensor, WSS) may be further introduced when the pose of the vehicle is determined. This is not limited in this embodiment of this application.

In this embodiment of this application, the standard definition (standard definition, SD) map is a map that provides road guidance in a navigation process, and cannot provide lane-level guidance. The vector direction of the road on the standard definition map means that a road on the standard definition map is expressed by using points, and each point has a value and a direction. The standard definition map may also provide a quantity of lanes.

302: Map a target element and a vector direction of a road on the standard definition map into a vehicle body coordinate system of the vehicle, where the target element includes a lane line or a road edge in the driving image.

In this embodiment of this application, the vector direction of the road may be switched from a global coordinate system to the vehicle body coordinate system through vehicle dead-reckoning (vehicle dead-reckoning, VDR).

In this embodiment of this application, the target element is lane-related information such as a lane line or a road edge extracted from a driving image, and the target element may be mapped into the vehicle body coordinate system through inverse perspective mapping (inverse perspective mapping, IPM).

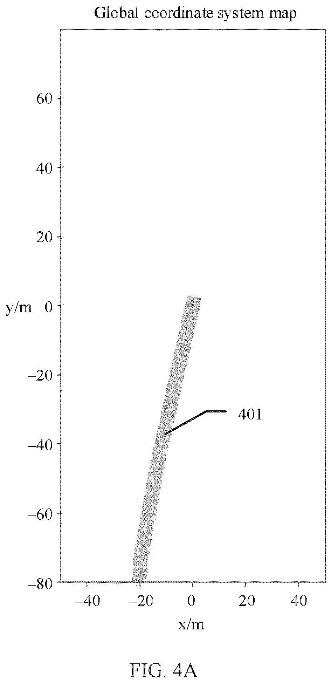

For the foregoing process of switching the vector direction of the road and the target element from the global coordinate system to the vehicle body coordinate system, refer to FIG. 4A to FIG. 4D for understanding.

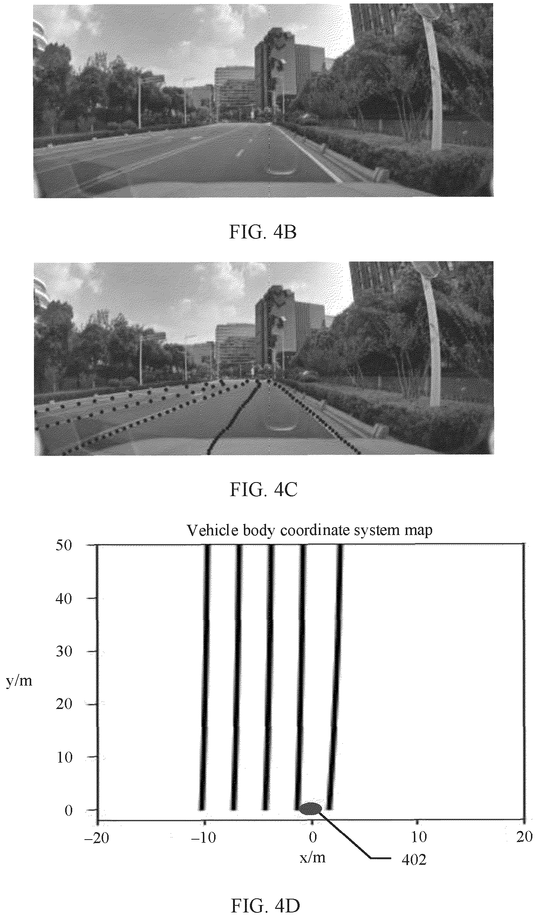

FIG. 4A is a brief diagram of an SD map in a global coordinate system. FIG. 4B and FIG. 4C are driving images. FIG. 4D is a diagram of data in a vehicle body coordinate system.

As shown in FIG. 4A, a vector direction of a road on the SD map in the global coordinate system is 401. As a road curvature changes, the vector direction of the road also changes.

FIG. 4B is a driving image shot by a camera. A diagram shown in FIG. 4C may be obtained by extracting lane lines and road edges in the driving image.

FIG. 4D is a diagram of mapping data in FIG. 4A and FIG. 4C into the vehicle body coordinate system. As shown in FIG. 4D, the vehicle body coordinate system is a right-hand coordinate system that uses a location of a vehicle 402 as an origin, and the vector direction of the road in FIG. 4A and data of the lane lines in FIG. 4C have been mapped into FIG. 4D.

In this embodiment of this application, mapping both the vector direction of the road and the target element into the vehicle body coordinate system of the pose of the vehicle may be understood as a fusion process of heterogeneous data. In the fusion process, fusion may be performed from a bird's-eye view (bird-eye view, BEV) angle of the vehicle. The bird's-eye view angle may be understood as a top view angle. Certainly, fusion may alternatively be performed from another view angle, for example, a front view angle of the vehicle. Data from different view angles may be mutually converted.

303: Construct a lane-level navigation map at the first moment based on the vector direction of the road, the target element, the pose of the vehicle at the first moment, and a pose of the vehicle at a second moment, where the second moment is earlier than the first moment, and the lane-level navigation map is used to provide a lane-level navigation service for a user.

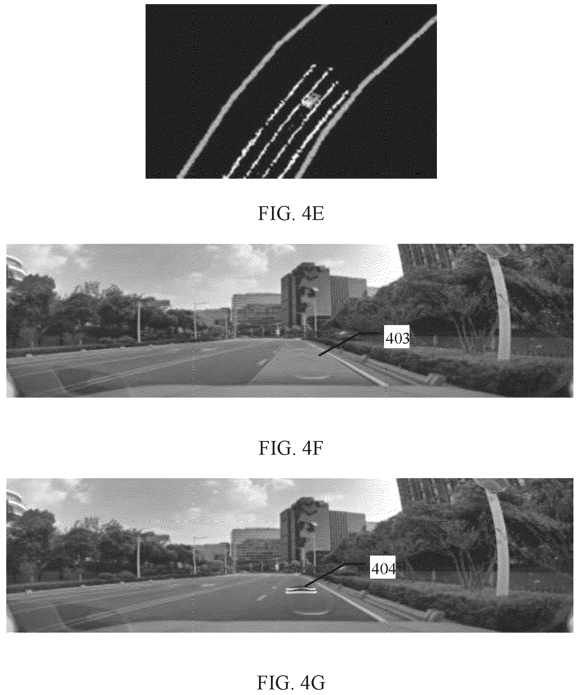

For the lane-level navigation map at the first moment, refer to FIG. 4E for understanding. As shown in FIG. 4E, the lane-level navigation service may be provided for the user by using the lane-level navigation map at the first moment. The lane-level navigation map shown in FIG. 4E may be understood as a lane-level navigation map of a top view angle of the vehicle.

For the lane-level navigation map at the first moment, refer to FIG. 4F and FIG. 4G for further understanding. FIG. 4F and FIG. 4G may be understood as lane-level navigation maps of a front view angle of a vehicle.

A navigation guidance mode in FIG. 4F is different from a navigation guidance mode in FIG. 4G. The navigation guidance mode in FIG. 4F is a mode of enhancing lane rendering of a travel lane. As shown in FIG. 4F, enhanced rendering is performed on a lane in which a vehicle travels. Within a specific distance from the vehicle, the lane in which the vehicle travels is highlighted or displayed by using another color different from a lane color, for example, 403 in FIG. 4F. The navigation guidance mode in FIG. 4G is a mode in which a guide arrow is rendered in the travel lane. As shown in FIG. 4G, in front of the vehicle, the guide arrow is rendered ahead of the lane in which the vehicle travels, for example, a guide arrow 404 in FIG. 4G. The guide arrow in FIG. 4G is merely an example. A shape, a color, and the like of the guide arrow are not limited in this application.

The lane-level navigation maps shown in FIG. 4F and FIG. 4G may indicate a lane in which the user should travel. Certainly, FIG. 4F and FIG. 4G are merely two display manners in examples of this application. The lane in which the user should travel may be further indicated in another form. This is not limited in this application.

In this embodiment of this application, the first moment and the second moment are different time points in the navigation process. The second moment and the first moment may be time points corresponding to two consecutive frames of driving images shot by a camera, or may be time points corresponding to two inconsecutive frames of driving images. The camera configured to shoot a driving image may be a vehicle-mounted camera, or may be a camera of a handheld terminal.

According to the solution provided in this application, in the navigation process, the lane-level navigation map may be constructed based on the SD map, and the lane-level navigation service can be obtained without a high-precision (High-precision, HD) map, a high-precision sensor, and excessive computing power. In this way, a high-quality navigation service can be provided for the user at relatively low costs.

The driving image may be understood as an image frame. The lane-level navigation map that is at the first moment and that is constructed in step 303 may be determined based on the lane-level navigation map at the second moment and a frame estimation result of an image frame at the first moment. The process may include: constructing the lane-level navigation map at the first moment based on the lane-level navigation map at the second moment and the frame estimation result at the first moment, where the frame estimation result at the first moment indicates a confidence of the driving image at the first moment.

Optionally, the frame estimation result at the first moment is obtained by using a target relational expression, and the target relational expression includes a product of a first weight and the vector direction of the road, a product of a second weight and inter-frame motion information, and a product result of a third weight and a parameter value of the target element.

Optionally, the inter-frame motion information is a result obtained by projecting a frame estimation result at the second moment to the first moment based on a variation between the pose of the vehicle at the first moment and the pose of the vehicle at the second moment.

The target relational expression may be expressed as follows:

$$L(p_t) = W_{navi}V_t + W_{vdr}B(pos_t, pos_{t-1}, L(p_{t-1})) + W_{de}I(\sum_i^j p_t)$$

Herein, $L(p_t)$ represents the frame estimation result at the first moment, $W_{navi}$ represents the first weight, $V_t$ represents the vector direction of the road, $W_{vdr}$ represents the second weight, $B$ represents the inter-frame motion information, $pos_t$ represents the pose of the vehicle at the first moment, $pos_{t-1}$ represents the pose of the vehicle at the second moment, $L(p_{t-1})$ represents the frame estimation result at the second moment, $W_{de}$ represents the third weight, and $I(\sum_i^j p_t)$ represents an IPM result of $i^{th}$ to $j^{th}$ target elements in an image frame at the first moment.

In this optional embodiment, a lane-level navigation map of a current frame may be determined based on a historical lane-level navigation map and a frame estimation result of the current frame, thereby improving efficiency of generating the lane-level navigation map.

Optionally, all of values of the first weight, the second weight, and the third weight in the foregoing target relational expression may be adjusted according to a requirement. Generally, before the constructing a lane-level navigation map at the first moment, the method further includes: updating at least one of the first weight, the second weight, or the third weight based on an error estimation result, where the error estimation result is a difference estimation result between the target element in the driving image at the first moment and the target element in the driving image at the second moment, or the error estimation result is a difference estimation result between the frame estimation result at the first moment and the frame estimation result at the second moment.

In this embodiment of this application, in a possible manner, the error estimation result may be determined based on a similarity obtained by comparing the target elements in the driving images at the two moments.

The similarity between the target elements at the two moments may be determined by comparing the target element in the driving image at the first moment with the target element in the driving image at the second moment. If the similarity is greater than a first threshold, it indicates that the target elements in the driving images at the two moments are highly similar. Because the two moments are usually relatively close, a relatively high similarity indicates that a sensing module that extracts a target element from a driving image works normally. If the similarity is less than the first threshold, it indicates that the similarity between the target elements in the driving images at the two moments is relatively low, and the sensing module may have mis-detection and missing detection. In this case, the reliability of the target element in the driving image at the first moment is relatively low. The corresponding third weight needs to be reduced, and the frame estimation result at the second moment is more maintained. In this way, the third weight is reduced if the error estimation result indicates that the similarity between the target element in the driving image at the first moment and the target element in the driving image at the second moment is less than the first threshold.

In this embodiment of this application, in another possible manner, an adjusted weight may be determined by comparing the frame estimation results at the two moments. If the similarity between the frame estimation results at the two moments is relatively small, it indicates that a possible lane change may occur at the first moment relative to the second moment. In this case, information in the driving image at the first moment should be used as much as possible. Therefore, the third weight needs to be increased. The third weight is increased if the error estimation result indicates that the similarity between the frame estimation result at the first moment and the frame estimation result at the second moment is less than a second threshold.

Regardless of whether the third weight is reduced or increased, accuracy of the lane-level navigation map can be improved.

In addition, in this embodiment of this application, when the lane-level navigation map at the first moment is generated, a location parameter of a lane line of another lane in the same orientation on the lane-level navigation map at the first moment may be further corrected based on the frame estimation result at the first moment and an orientation parameter and a width of the lane in which the vehicle is located.

In this embodiment of this application, if the frame estimation result at the first moment is relatively small, it indicates very low reliability that is of a prediction result and that is determined based on the target element, the pose of the vehicle, and the vector direction of the road on the SD map. The prediction result has no value for use. In this case, the lane line does not need to be corrected. If the frame estimation result at the first moment is relatively appropriate, the lane in which the vehicle is located is usually a clearest lane in the driving image. Therefore, the location parameter of the lane line of the another lane in the same orientation on the navigation map can be corrected based on the orientation parameter and the width of the lane line of the lane in which the vehicle is located.

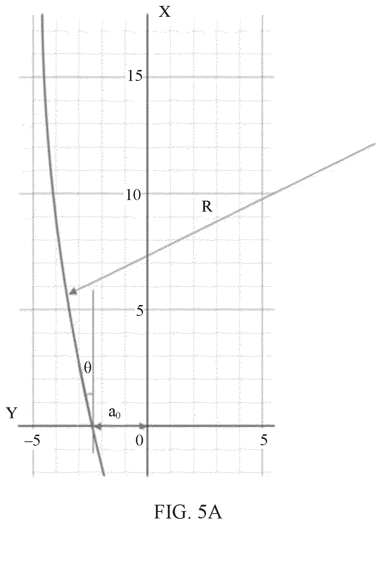

The orientation parameter of the lane may include an included angle, a lane line offset, and a lane line curvature. The included angle may be an included angle between a vehicle head orientation and a lane line orientation, or may be described as an included angle of the lane line relative to an axis in the vehicle body coordinate system. The lane line offset is an offset between the lane line and an origin of a vehicle system. For the orientation parameter of the lane, refer to FIG. 5A for understanding. As shown in FIG. 5A, in a vehicle body coordinate system, a lane line is a high-order term fitting result, and the lane line may be understood as a curve whose curvature radius is R, lane line offset is $a_0$, and included angle with the X axis is $\theta$.

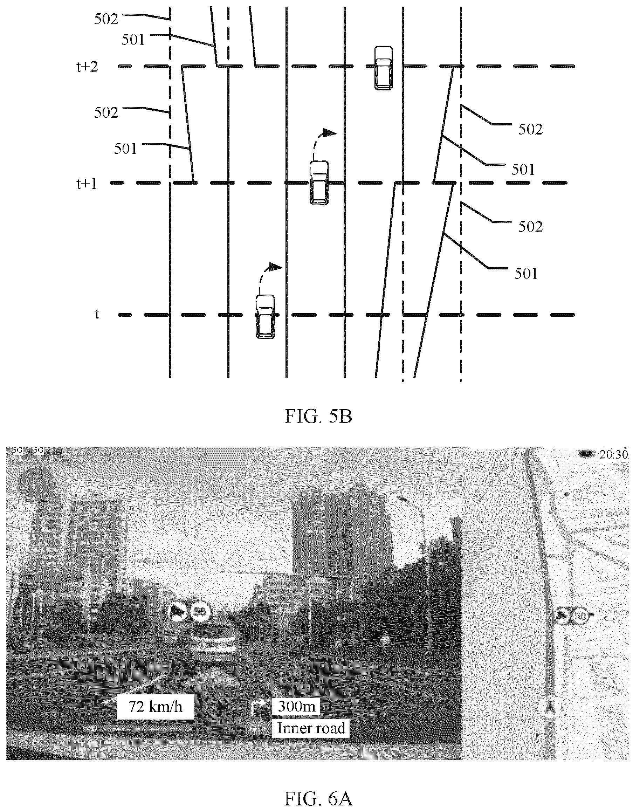

For a diagram of lane correction, refer to FIG. 5B for understanding. As shown in FIG. 5B, five lanes are shown. At a moment t, a vehicle travels in a second lane from the left. In this case, a first lane from the left and a third lane from the left can be relatively clearly extracted from a driving image. However, two rightmost lanes cannot be accurately restored from the driving image at the moment t, and the two rightmost lanes 501 may be corrected based on a width of the second lane from the left in which the vehicle travels, and an orientation parameter of the lane to obtain lanes 502.

After the vehicle makes a lane change to the third lane from the left at the moment t, the vehicle travels on the third lane from the left at a moment t+1. In this case, the second lane from the left and a fourth lane from the left can be relatively clearly extracted from a driving image, but the first lane from the left and a first lane from the right cannot be accurately restored from the driving image at the moment t+1. Therefore, the first lane 501 from the left and the first lane 501 from the right may be corrected based on a width of the third lane from the left in which the vehicle is located, and an orientation parameter of the lane, to obtain lanes 502.

After the vehicle makes a lane change to the second lane from the right at the moment t+1, the vehicle travels on the second lane from the right at a moment t+2. In this case, the third lane from the left and the first lane from the right can be relatively clearly extracted from a driving image, but the first lane and the second lane from the left cannot be accurately restored from the driving image at the moment t+2. Therefore, the first lane 501 and the second lane 501 from the left may be corrected based on a width of the second lane from the right in which the vehicle is located, and an orientation parameter of the lane, to obtain lanes 502.

In this embodiment of this application, lane-level positioning guidance may be provided by using a lane-level navigation map. The process may include: performing semantic merging based on the lane in which the vehicle is located on the lane-level navigation map at the first moment and navigation information input by the user on the standard definition map, to output a lane-level navigation guidance prompt, where the lane-level navigation guidance prompt includes lane keeping, lane changing to the left, or lane changing to the right.

In this embodiment of this application, the navigation information may include a navigation destination and a quantity of lanes of a road on which the vehicle is currently located. Semantic merging means a process of directly providing clear navigation guidance with no need of performing conversion again by the user. For example, entering two lanes on a left side in an SD map navigation scenario is merged into lane keeping or lane changing to the left, and entering a lane on a right side in the SD map navigation scenario is merged into lane keeping or lane changing to the right. In this way, the user can perform a corresponding operation based on the lane-level navigation guidance prompt, and the user does not need to observe the lane in which the user is currently located and then determine whether to perform a lane change operation.

In an optional embodiment, the lane-level navigation guidance prompt is lane keeping if it is determined, based on the lane in which the vehicle is located and the navigation information, that the vehicle needs to keep going straight, that the vehicle is already located on a leftmost lane in a scenario in which the vehicle needs to make a U-turn or turn left, or that the vehicle is already located on a rightmost lane in a scenario in which the vehicle needs to turn right.

In this embodiment of this application, in a lane keeping case, for display effect on the lane-level navigation map, refer to FIG. 6A for understanding. As shown in FIG. 6A, navigation guidance on the lane-level navigation map indicates keeping going straight.

In another optional embodiment, the lane-level navigation guidance prompt is lane changing to the left, or lane changing to the right if it is determined, based on the lane in which the vehicle is located and the navigation information, that the vehicle needs to make a lane change.

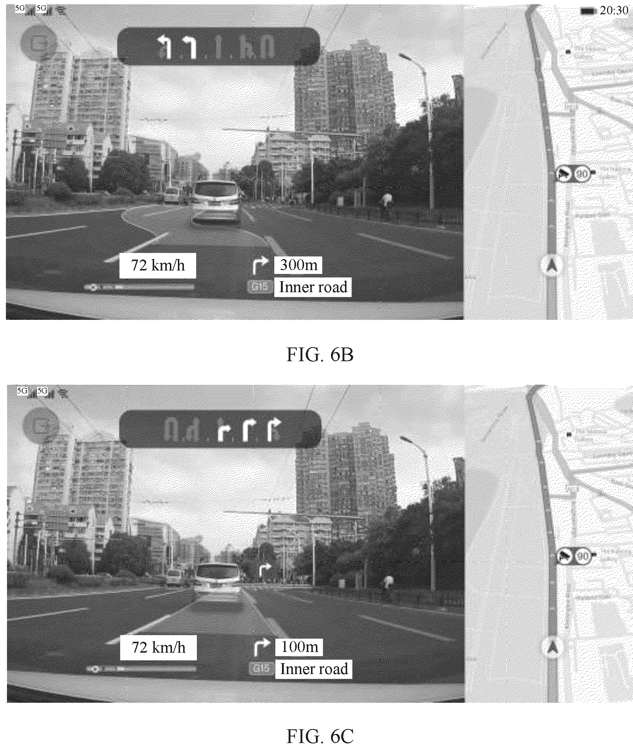

In this embodiment of this application, lane changing to the left is used as an example. For the display effect on the lane-level navigation map, refer to FIG. 6B for understanding. As shown in FIG. 6B, navigation guidance on the lane-level navigation map indicates lane changing to the left.

In this embodiment of this application, the lane-level navigation map may further provide intersection guidance. As shown in FIG. 6C, for an intersection scenario, intersection guidance may be provided based on an intersection guidance prompt.

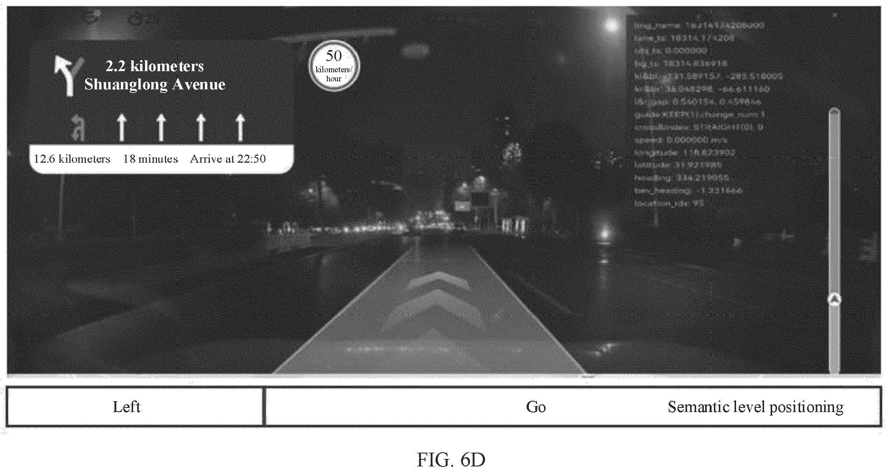

In a multi-lane scenario, lanes on two sides are very likely to be blocked, or a field of view is not large enough, thereby causing missing. As a result, the lanes cannot be aligned with a navigation lane. After semantic merging is performed, as shown in FIG. 6D, all four lanes on a right side are straight lanes, and a semantic positioning result is a straight lane instead of a second lane from the left. This greatly increases a fault tolerance rate and robustness of a positioning result, and does not cause any function loss to a guidance result.

A semantic posterior check is performed on a semantic level positioning result with reference to traffic regulation prior information that generally indicates that a left-turn lane is on the left, and a right-turn lane is on the right. In a positioning scenario, for a left-turn or right-turn scenario, conversion to lane changing to the left and lane changing to the right is performed. Absolute positioning is performed based on a road edge, instead of relative positioning based on numbering performed from the left or the right, to greatly improve accuracy.

In this embodiment of this application, during navigation guidance, the lane in which the vehicle is currently located needs to be positioned. If the lane in which the vehicle is currently located cannot be determined in the driving image at the first moment, for example, in an intersection scenario or a congestion scenario, the lane in which the vehicle is currently located cannot be determined due to blocking of vehicles on two sides or blocking of front and rear vehicles. In this case, a historical driving image may be queried (the lane in which the vehicle is located may be determined), and the lane in which the vehicle is located at the first moment may be determined with reference to a driving behavior of the vehicle between the first moment and the third moment at which the historical driving image is generated. The process may include: when the lane in which the vehicle is located cannot be determined based on the driving image at the first moment, determining, based on a lane in which the vehicle is located in a driving image at a third moment and a driving behavior from the third moment to the first moment, the lane in which the vehicle is located at the first moment, where the third moment is earlier than the first moment, a distance between the third moment and the first moment is less than a third threshold, and a frame estimation result at the third moment is an estimation result with highest reliability in driving images generated from the third moment to the first moment. In this way, lane-level navigation guidance in a complex scenario can be satisfied.

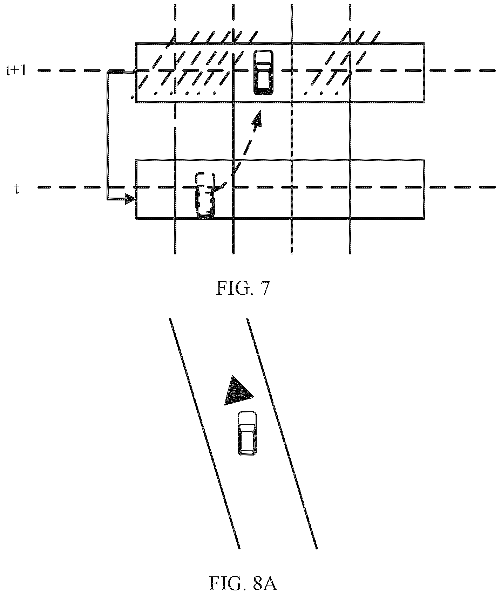

This process may be understood with reference to FIG. 7. As shown in FIG. 7, a vehicle is blocked by obstacles on the left and the right at the moment t+1, and a lane in which the vehicle is located cannot be positioned. In this case, a historical driving image may be queried. For example, it is found that the vehicle is not blocked in a driving image at a moment t, and it may be determined through positioning that the vehicle is located in a first lane from the left. In this way, it may be determined, through positioning based on the first lane in which the vehicle is located at the moment t and a driving behavior that the vehicle performs lane changing to the right once from the moment t to the moment t+1, that the vehicle is located in a second lane from the left at the moment t+1.

In addition, in this embodiment of this application, a virtual arrow used to indicate a navigation direction is further provided on the lane-level navigation map. As shown in FIG. 8A, an orientation of the virtual arrow is consistent with an orientation of a lane. In this way, a driving requirement of the user is better satisfied.

In this embodiment of this application, in the navigation process, a pose of a virtual arrow used to indicate a navigation direction may be further adjusted based on multi-dimensional parameters, where the multi-dimensional parameters include at least two of an orientation angle, a roll angle, a vehicle system horizontal offset, or a vehicle system vertical offset.

For example, the virtual arrow includes four dimensions: the orientation angle, the roll angle, the vehicle system horizontal offset, or the vehicle system vertical offset. All the four dimensions may be obtained by using the following relational expression: $y = a(e^{-x} + 1)x$ .

Herein, $a$ represents an amplification coefficient, $e^{-x}$ represents an exponential relationship, $x$ represents a horizontal axis input, $y$ represents outputs, in four dimensions, corresponding to different $x$ s, and $x$ may be a curvature of a lane line or an included angle of a lane.

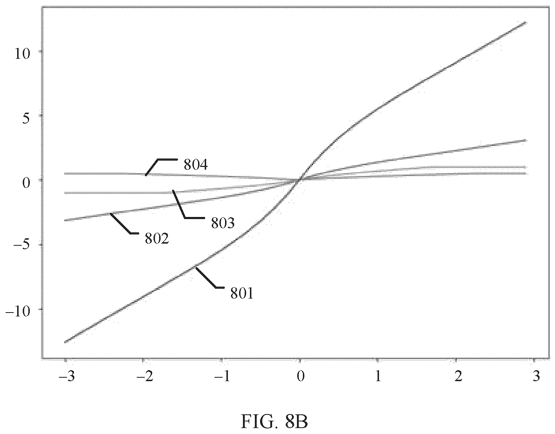

As shown in FIG. 8B, a line 801 represents the roll angle, a line 802 represents the orientation angle, a line 803 represents the vehicle system horizontal offset, and a line 804 represents the vehicle system vertical offset.

For effect of the virtual arrow obtained by using the foregoing relational expression, refer to FIG. 4G for understanding. As shown in FIG. 4G, the pose of the virtual arrow is more stereoscopic, and a presentation manner is better, to effectively improve navigation guidance effect.

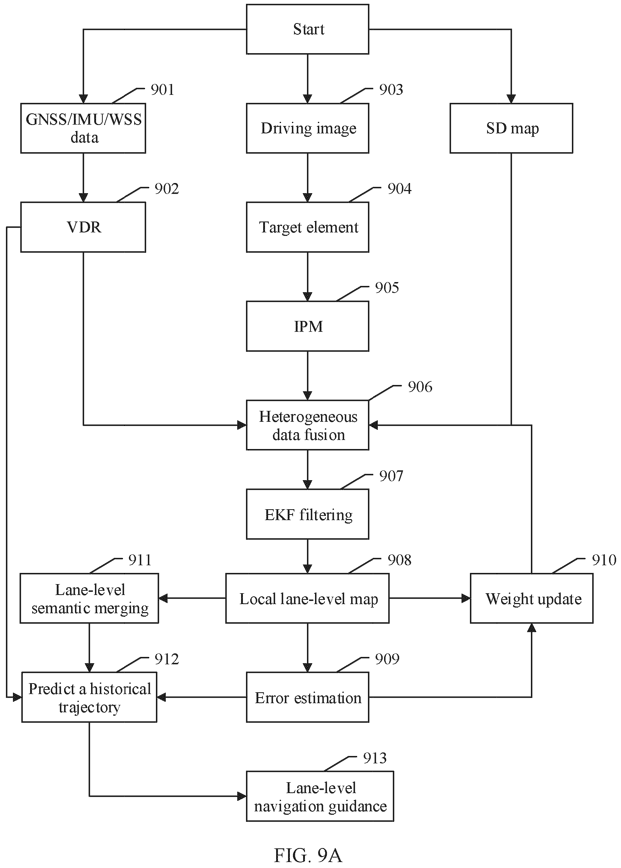

In this embodiment of this application, to better understand the foregoing navigation method, the following may describe the foregoing process as a whole with reference to FIG. 9A.

As shown in FIG. 9A, the process includes the following steps.

901: Collect longitude and latitude data of a vehicle by using a GNSS sensor, collect corresponding IMU data by using an IMU sensor, and further collect wheel speed data of the vehicle by using a WSS.

902: Determine a pose of the vehicle in a vehicle body coordinate system by using a VDR module based on the longitude and latitude data, the IMU data, and the wheel speed data.

The wheel speed data may be used or may not be used.

903: Obtain a driving image by using a camera.

904: Extract a target element from the driving image.

The target element may include visual element information such as a lane line, a road edge, and a landmark.

905: Map the target element into the vehicle body coordinate system by using an IPM.

906: Based on a pose in a world coordinate system provided by using the VDR, obtain a vector direction of a road on a corresponding SD map, and switch a value of the vector direction from the world coordinate system to the vehicle body coordinate system.

Mapping into the vehicle system coordinate system in which the pose of the vehicle is located in step 905 and step 906 may be understood as fusion of data in three different domains, and may also be referred to as heterogeneous data fusion.

907: Perform filtering after a result of heterogeneous data fusion is accumulated in a plurality of frames.

A filtering manner may be extended Kalman filter (extended kalman filter, EKF).

908: Construct data in a space of a period of time as a local lane-level map.

The local lane-level map may also be understood as the lane-level navigation map described above. For a process of constructing the local lane-level map, refer to the target relational expression described above for understanding.

909: Error estimation.

910: Weight update.

For a relationship between error estimation in step 909 and step 910, and a related process, refer to the foregoing corresponding description for understanding.

911: Lane-level semantic merging.

When the constructed local lane-level map is consistent with navigation information on the SD map, semantic merging is performed with reference to lane passing attributes (turn left, go straight, turn right, and the like) provided in current navigation to complete lane-level positioning.

For the process, refer to descriptions in FIG. 6A to FIG. 6D for understanding.

912: Predict a historical trajectory.

If the local lane-level map is incomplete at a current moment and is inconsistent with navigation lane information, prediction of the historical trajectory is completed with reference to segmentation errors by querying historical data, to estimate a current lane-level positioning result.

For the process, refer to descriptions in FIG. 7 for understanding.

913: Lane-level navigation guidance.

For the process, refer to descriptions in FIG. 6A to FIG. 6D for understanding.

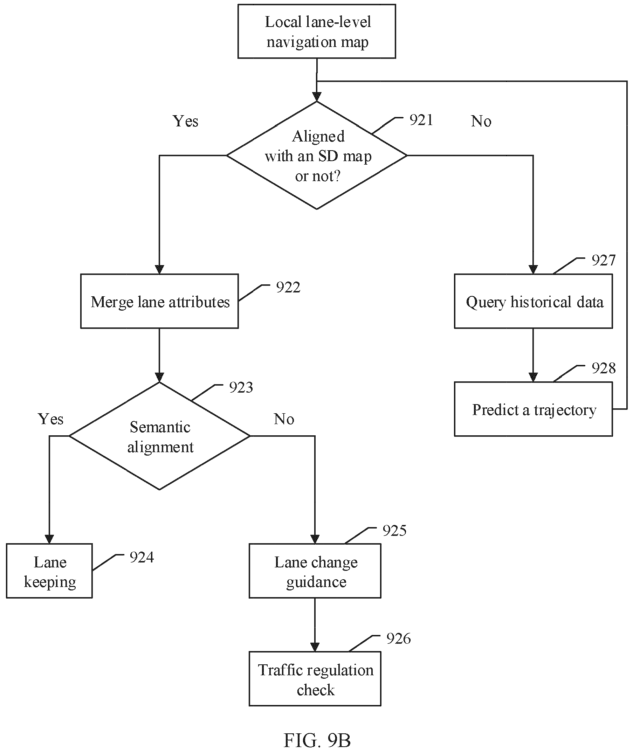

The processes of step 911 and step 912 may also be understood with reference to FIG. 9B.

As shown in FIG. 9B, the process includes the following steps.

921: Determine whether the local lane-level map is aligned with the SD map; and if the local lane-level map is aligned with the SD map, perform step 922; or if the local lane-level map is not aligned with the SD map, perform step 927.

922: Merge lane attributes.

If a lane in which the vehicle is located can be determined, semantic merging can be performed with reference to the lane passing attributes (turn left, go straight, turn right, and the like) provided in current navigation to complete lane-level positioning.

923: Determine whether semantic alignment is implemented; and if semantic alignment is implemented, perform step 924; or if semantic alignment is not implemented, perform step 925.

Semantic alignment means that navigation semantics in local lane-level navigation fully include a navigation meaning on the SD map.

924: Lane keeping.

925: Lane change guidance.

926: Traffic regulation check.

927: Query historical data.

928: Predict a trajectory.

If the lane in which the vehicle is located is determined once, steps 927 and 928 may be cyclically performed until the local lane-level map is aligned with the SD map.

After the foregoing steps are completed, guidance such as lane keeping, lane change guidance, and steering guidance may be completed by using constructed local lane-level map information and a navigation status, and dimensionality increase processing is performed based on actual orientation data of a lane line, to improve a guidance fitting degree of the virtual arrow and user experience. For the process, refer to the foregoing descriptions of FIG. 8A, FIG. 8B, and FIG. 4G for understanding.

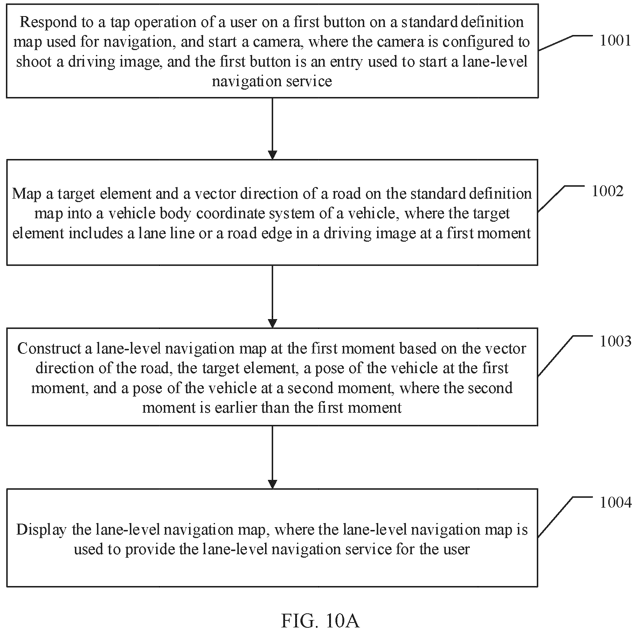

An embodiment of this application further provides another navigation method. As shown in FIG. 10A, another embodiment of the navigation method provided in embodiments of this application includes the following steps.

1001: Respond to a tap operation of a user on a first button on a standard definition map used for navigation, and start a camera, where the camera is configured to shoot a driving image, and the first button is an entry used to start a lane-level navigation service.

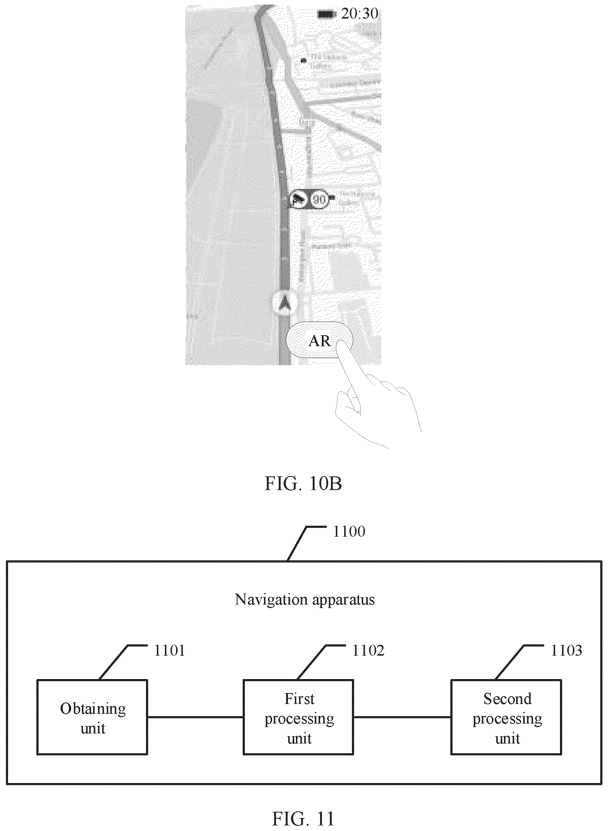

The first button may be an augmented reality (augmented reality, AR) button. As shown in FIG. 10B, the user taps the AR button on an interface of a standard definition map, to start the camera to shoot the driving image.

1002: Map a target element and a vector direction of a road on the standard definition map into a vehicle body coordinate system of a vehicle, where the target element includes a lane line or a road edge in a driving image at a first moment.

1003: Construct a lane-level navigation map at the first moment based on the vector direction of the road, the target element, a pose of the vehicle at the first moment, and a pose of the vehicle at a second moment, where the second moment is earlier than the first moment.

For step 1002 and step 1003, refer to step 302 and step 303 in FIG. 3 for understanding. Details are not described herein again.

1004: Display the lane-level navigation map, where the lane-level navigation map is used to provide the lane-level navigation service for the user.

In this embodiment of this application, on a navigation interface of the standard definition map, generation of the lane-level navigation map may be started by tapping the entry used to start the lane-level navigation service, to obtain the lane-level navigation map to navigate the user. The lane-level navigation service can be obtained without an HD map, a high-precision sensor, and excessive computing power. In this way, a high-quality navigation service can be provided for the user at relatively low costs.

In this possible embodiment, the processes shown in FIG. 4A to FIG. 9B may also be performed. Details are not described herein again.

Optionally, the method in this embodiment of this application may include: responding to a switch operation of the user on a view angle button on the lane-level navigation map, and switching from a lane-level navigation map of a first view angle to a lane-level navigation map of a second view angle, where the first view angle includes a top view angle of the vehicle or a front view angle of the vehicle, the second view angle includes the front view angle of the vehicle or the top view angle of the vehicle, and the first view angle is different from the second view angle.

This embodiment may be understood with reference to FIG. 4E and FIG. 4F above. The user may tap the view angle button on the lane-level navigation map to perform the switch operation. For example, a lane-level navigation map of a top view angle in FIG. 4E is switched to a lane-level navigation map of a front view angle in FIG. 4F. Alternatively, certainly, a lane-level navigation map of a front view angle in FIG. 4F is switched to a lane-level navigation map of a top view angle in FIG. 4E.

Certainly, the foregoing view angle switching process may alternatively be understood with reference to FIG. 4E and FIG. 4G above. A lane-level navigation map of a top view angle in FIG. 4E is switched to a lane-level navigation map of a front view angle in FIG. 4G. Alternatively, certainly, a lane-level navigation map of a front view angle in FIG. 4G is switched to a lane-level navigation map of a top view angle in FIG. 4E.

In this embodiment of this application, the user may switch between the top view angle and the front view angle. Certainly, another view angle may be further included. The user may switch between different view angles according to a requirement, for example, a left view angle, a right view angle, and a rear view angle, to display lane-level navigation maps of different view angles.

Although no view angle button is shown in FIG. 4E, FIG. 4F, and FIG. 4G, it may be understood that the view angle button may be presented in various possible forms. This is not limited in this application.

Optionally, the method in this embodiment of this application may include: responding to a switch operation of the user on a navigation guidance mode on the lane-level navigation map, and switching from a first navigation guidance mode to a second navigation guidance mode, where the first navigation guidance mode includes a mode of enhancing lane rendering of a travel lane or a mode of rendering a guide arrow on a travel lane, and the first navigation guidance mode is different from the second navigation guidance mode.

This embodiment may be understood with reference to FIG. 4F and FIG. 4G above. The user may tap the navigation guidance mode on the lane-level navigation map to perform the switch operation. For example, the navigation guidance mode in FIG. 4F: a mode of enhancing lane rendering of a travel lane is switched to a mode of rendering a guide arrow on the travel lane in FIG. 4G. Certainly, a mode of rendering a guide arrow on a travel lane in FIG. 4G may be switched to the navigation guidance mode in FIG. 4F: a mode of enhancing lane rendering of the travel lane Certainly, in this embodiment of this application, another form of navigation guidance mode may be further included, and switching may be performed between different navigation guidance modes.

Although no button related to navigation guidance mode switching is shown in FIG. 4F and FIG. 4G, it may be understood that navigation guidance mode switching may be performed by using a button, or may be performed in another manner. This is not limited in this application.

Optionally, the method in this embodiment of this application may include: responding to a control operation of the user on an information button on the lane-level navigation map, and closing a navigation guidance prompt on the lane-level navigation map, or displaying a navigation guidance prompt on the lane-level navigation map, where the navigation guidance prompt includes lane keeping, lane changing to the left, lane changing to the right, an intersection indication, or an alarm indication.

This embodiment may be understood with reference to FIG. 6A to FIG. 6C above. In FIG. 6A to FIG. 6C, navigation guidance prompts such as a speed, a lane change indication, a camera, and intersection guidance are displayed on the lane-level navigation map. The user may close the navigation guidance prompt or enable the navigation guidance prompt by using an operation information button.

Although the information button is not shown in FIG. 6A to FIG. 6C, it may be understood that the information button may be presented in various possible forms. This is not limited in this application.

Although the foregoing describes switching in a button form, it may be understood that switching between different interfaces may also be performed through voice control. This is not limited in this application.

To better implement the foregoing solution of embodiments of this application, the following further provides a related apparatus for implementing the foregoing solution. For details, refer to FIG. 11. FIG. 11 is a diagram of a structure of a navigation apparatus according to an embodiment of this application. The navigation apparatus 1100 may include an obtaining unit 1101, a first processing unit 1102, and a second processing unit 1103.

The obtaining unit 1101 is configured to obtain a driving image and a pose of a vehicle at a first moment, and a standard definition map used for navigation. The obtaining unit 1101 may perform step 301 in the method embodiment corresponding to FIG. 3.

The first processing unit 1102 is configured to map a target element and a vector direction of a road on the standard definition map into a vehicle body coordinate system of the vehicle, where the target element includes a lane line or a road edge in the driving image. The first processing unit 1102 may perform step 302 in the method embodiment corresponding to FIG. 3.

The second processing unit 1103 is configured to construct a lane-level navigation map at the first moment based on the vector direction of the road, the target element, the pose of the vehicle at the first moment, and a pose of the vehicle at a second moment, where the second moment is earlier than the first moment, and the lane-level navigation map is used to provide a lane-level navigation service for a user. The second processing unit 1103 may perform step 303 in the method embodiment corresponding to FIG. 3.

Optionally, the second processing unit 1103 is specifically configured to construct the lane-level navigation map at the first moment based on a lane-level navigation map at the second moment and a frame estimation result at the first moment, where the frame estimation result at the first moment indicates a confidence of the driving image at the first moment.

Optionally, the frame estimation result at the first moment is obtained by using a target relational expression, and the target relational expression includes a product of a first weight and the vector direction of the road, a product of a second weight and inter-frame motion information, and a product result of a third weight and a parameter value of the target element.

Optionally, the inter-frame motion information is a result obtained by projecting a frame estimation result at the second moment to the first moment based on a variation between the pose of the vehicle at the first moment and the pose of the vehicle at the second moment.

Optionally, the second processing unit 1103 is further configured to: before the lane-level navigation map at the first moment is constructed, update at least one of the first weight, the second weight, or the third weight based on an error estimation result, where the error estimation result is a difference estimation result between the target element in the driving image at the first moment and the target element in the driving image at the second moment, or the error estimation result is a difference estimation result between the frame estimation result at the first moment and the frame estimation result at the second moment.

Optionally, the third weight is reduced if the error estimation result indicates that a similarity between the target element in the driving image at the first moment and the target element in the driving image at the second moment is less than a first threshold.

Optionally, the third weight is increased if the error estimation result indicates that a similarity between the frame estimation result at the first moment and the frame estimation result at the second moment is less than a second threshold.

Optionally, the second processing unit 1103 is further configured to correct, based on the frame estimation result at the first moment and an orientation parameter and a width of a lane in which the vehicle is located, a location parameter of a lane line of another lane in the same orientation on the lane-level navigation map at the first moment.

Optionally, the second processing unit 1103 is further configured to: perform semantic merging based on the lane in which the vehicle is located on the lane-level navigation map at the first moment and navigation information input by the user on the standard definition map, to output a lane-level navigation guidance prompt, where the lane-level navigation guidance prompt includes lane keeping, lane changing to the left, or lane changing to the right.

Optionally, the lane-level navigation guidance prompt is lane keeping if it is determined, based on the lane in which the vehicle is located and the navigation information, that the vehicle needs to keep going straight, that the vehicle is already located on a leftmost lane in a scenario in which the vehicle needs to make a U-turn or turn left, or that the vehicle is already located on a rightmost lane in a scenario in which the vehicle needs to turn right.

Optionally, the lane-level navigation guidance prompt is lane changing to the left, or lane changing to the right if it is determined, based on the lane in which the vehicle is located and the navigation information, that the vehicle needs to make a lane change.

Optionally, the second processing unit 1103 is further configured to: when the lane in which the vehicle is located cannot be determined based on the driving image at the first moment, determine, based on a lane in which the vehicle is located in a driving image at a third moment and a driving behavior from the third moment to the first moment, the lane in which the vehicle is located at the first moment, where the third moment is earlier than the first moment, a distance between the third moment and the first moment is less than a third threshold, and a frame estimation result at the third moment is an estimation result with highest reliability in driving images generated from the third moment to the first moment.

Optionally, the second processing unit 1103 is further configured to: in a navigation process, adjust, based on multi-dimensional parameters, a pose of a virtual arrow used to indicate a navigation direction, where the multi-dimensional parameters include at least two of an orientation angle, a roll angle, a vehicle system horizontal offset, or a vehicle system vertical offset.

Optionally, in the navigation process, the orientation of the virtual arrow is consistent with the orientation of the lane.

It should be noted that content such as information exchange and an execution process between the modules/units in the navigation apparatus 1100 is based on the same concept as the method embodiments corresponding to FIG. 3 to FIG. 9B in this application. For specific content, refer to the descriptions in the foregoing method embodiments in this application. Details are not described herein again.

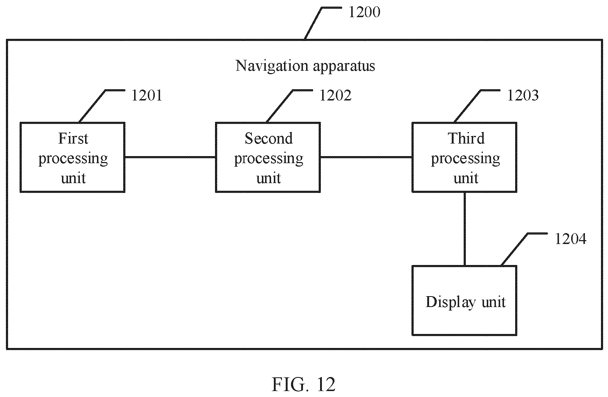

FIG. 12 is a diagram of a structure of a navigation apparatus according to an embodiment of this application. The navigation apparatus 1200 may include a first processing unit 1201, a second processing unit 1202, a third processing unit 1203, and a display unit 1204.

The first processing unit 1201 is configured to: respond to a tap operation of a user on a first button on a standard definition map used for navigation, and start a camera, where the camera is configured to shoot a driving image, and the first button is an entry used to start a lane-level navigation service.

The second processing unit 1202 is configured to map a target element and a vector direction of a road on the standard definition map into a vehicle body coordinate system of the vehicle, where the target element includes a lane line or a road edge in a driving image at a first moment.

The third processing unit 1203 is configured to construct a lane-level navigation map at the first moment based on the vector direction of the road, the target element, a pose of the vehicle at the first moment, and a pose of the vehicle at a second moment, where the second moment is earlier than the first moment.

The display unit 1204 is configured to display the lane-level navigation map, where the lane-level navigation map is used to provide the lane-level navigation service for the user.

Optionally, the first processing unit 1201 is further configured to: respond to a switch operation of the user on a view angle button on the lane-level navigation map, and switch from a lane-level navigation map of a first view angle to a lane-level navigation map of a second view angle, where the first view angle includes a top view angle of the vehicle or a front view angle of the vehicle, the second view angle includes the front view angle of the vehicle or the top view angle of the vehicle, and the first view angle is different from the second view angle.

Optionally, the first processing unit 1201 is further configured to: respond to a switch operation of the user on a navigation guidance mode on the lane-level navigation map, and switch from a first navigation guidance mode to a second navigation guidance mode, where the first navigation guidance mode includes a mode of enhancing lane rendering of a travel lane or a mode of rendering a guide arrow on a travel lane, and the first navigation guidance mode is different from the second navigation guidance mode.

Optionally, the first processing unit 1201 is further configured to: respond to a control operation of the user on an information button on the lane-level navigation map, and close a navigation guidance prompt on the lane-level navigation map, or display a navigation guidance prompt on the lane-level navigation map, where the navigation guidance prompt includes lane keeping, lane changing to the left, lane changing to the right, an intersection indication, or an alarm indication.

It should be noted that content such as information exchange and an execution process between the modules/units in the navigation apparatus 1200 is based on the same concept as the method embodiments corresponding to FIG. 3 to FIG. 10B in this application. For specific content, refer to the descriptions in the foregoing method embodiments in this application. Details are not described herein again.

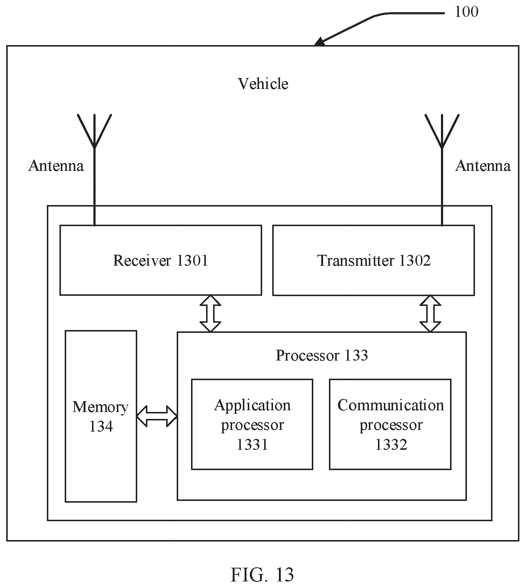

An embodiment of this application further provides a vehicle. With reference to the foregoing description of FIG. 1, with reference to FIG. 13, FIG. 13 is a diagram of a structure of a vehicle according to an embodiment of this application. The navigation apparatus 1100 described in the embodiment corresponding to FIG. 11 or the navigation apparatus 1200 described in the embodiment corresponding to FIG. 12 may be deployed on the vehicle 100, to implement functions of the vehicle in the embodiments corresponding to FIG. 3 to FIG. 10B. Because the vehicle 100 may further have a communication function in some embodiments, in addition to the components shown in FIG. 1, the vehicle 100 may further include a receiver 1301 and a transmitter 1302. The processor 133 may include an application processor 1331 and a communication processor 1332. In some embodiments of this application, the receiver 1301, the transmitter 1302, the processor 133, and the memory 134 may be connected through a bus or in another manner.

The processor 133 controls an operation of the vehicle. In specific application, components of the vehicle 100 are coupled together by using a bus system. In addition to a data bus, the bus system includes a power bus, a control bus, a status signal bus, and the like. However, for clear description, various types of buses in the figure are marked as the bus system.

The receiver 1301 may be configured to: receive input digit or character information, and generate a signal input related to a related setting and function control of the vehicle. The transmitter 1302 may be configured to output digit or character information through a first interface. The transmitter 1302 may be further configured to send instructions to a disk group through the first interface, to modify data in the disk group. The transmitter 1302 may further include a display device such as a display.

In this embodiment of this application, the application processor 1331 is configured to perform the navigation method performed by the vehicle in the embodiment corresponding to FIG. 2. Specifically, the application processor 1331 is configured to perform the following steps: obtaining a driving image and a pose of a vehicle at a first moment, and a standard definition map used for navigation; mapping a target element and a vector direction of a road in the standard definition map into a vehicle body coordinate system of the vehicle, where the target element includes a lane line or a road edge in the driving image; and constructing a lane-level navigation map at the first moment based on the vector direction of the road, the target element, the pose of the vehicle at the first moment, and a pose of the vehicle at a second moment, where the second moment is earlier than the first moment, and the lane-level navigation map is used to provide a lane-level navigation service for a user.

The application processor 1331 may be further configured to perform steps 1001 to 1003 in the embodiment corresponding to FIG. 10A.

Certainly, the application processor 1331 may further perform other functions performed by the second processing unit 1103 in FIG. 11, or may further perform other functions performed by the first processor 1201, the second processing unit 1202, or the third processor 1203 in FIG. 12. These functions are not listed one by one in this application.

It should be noted that, for a specific implementation of performing the navigation method by the application processor 1331 and beneficial effects, reference may be made to descriptions in the method embodiments corresponding to FIG. 3 to FIG. 10B. Details are not described herein again.

An embodiment of this application further provides a computer-readable storage medium. The computer-readable storage medium stores a program used to generate a vehicle travel speed. When the program runs on a computer, the computer is enabled to perform the steps in the methods described in the embodiments shown in FIG. 3 to FIG. 10B.

An embodiment of this application further provides a computer program product. When the computer program product runs on a computer, the computer is enabled to perform the steps in the methods described in the embodiments shown in FIG. 3 to FIG. 10B.

An embodiment of this application further provides a circuit system. The circuit system includes a processing circuit. The processing circuit is configured to perform the steps in the methods described in the embodiments shown in FIG. 3 to FIG. 10B.

The navigation apparatus or the vehicle provided in embodiments of this application may be specifically a chip. The chip includes a processing unit and a communication unit. The processing unit may be, for example, a processor, and the communication unit may be, for example, an input/output interface, a pin, or a circuit. The processing unit may execute computer executable instructions stored in a storage unit, so that the chip in the server performs the vehicle travel speed generation method described in the embodiments shown in FIG. 3 to FIG. 9B. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

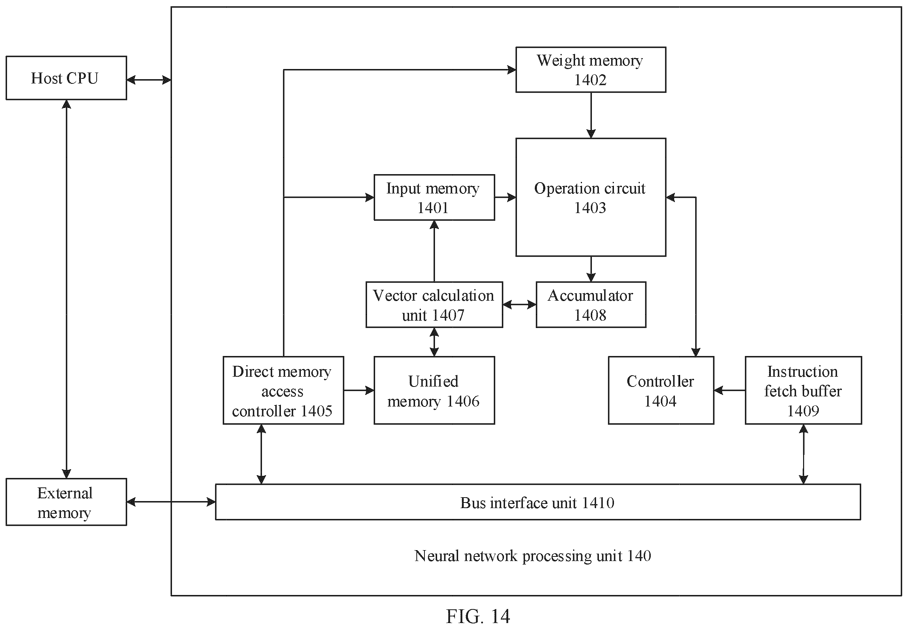

Specifically, with reference to FIG. 14, FIG. 14 is a diagram of a structure of a chip according to an embodiment of this application. The chip may be represented as a neural network processing unit NPU 140. The NPU 140 is mounted to a host CPU (Host CPU) as a coprocessor, and a task is allocated by the host CPU. A core part of the NPU is an operation circuit 140. The operation circuit 1403 is controlled by a controller 1404 to extract matrix data in a memory and perform a multiplication operation.

In some implementations, the operation circuit 1403 includes a plurality of process engines (Process Engines, PEs). In some implementations, the operation circuit 1403 is a two-dimensional systolic array. The operation circuit 1403 may be alternatively a one-dimensional systolic array or another electronic circuit capable of performing mathematical operations such as multiplication and addition. In some implementations, the operation circuit 1403 is a general-purpose matrix processor.

For example, it is assumed that there is an input matrix A, a weight matrix B, and an output matrix C. The operation circuit fetches, from a weight memory 1402, data corresponding to the matrix B, and buffers the data on each PE in the operation circuit. The operation circuit fetches data of the matrix A from an input memory 1401 to perform a matrix operation on the matrix B, and stores an obtained partial result or an obtained final result of the matrix in an accumulator (accumulator) 1408.

A unified memory 1406 is configured to store input data and output data. Weight data is directly transferred to the weight memory 1402 through a direct memory access controller (Direct Memory Access Controller, DMAC) 1405. The input data is also transferred to the unified memory 1406 through the DMAC.

A BIU is a bus interface unit, namely, a bus interface unit 1410, and is used for interaction between an AXI bus and the DMAC and between the AXI bus and an instruction fetch buffer (Instruction Fetch Buffer, IFB) 1409.

The bus interface unit (Bus Interface Unit, BIU for short) 1410 is used by the instruction fetch buffer 1409 to obtain instructions from an external memory, and is further used by the direct memory access controller 1405 to obtain original data of the input matrix A or the weight matrix B from the external memory.

The DMAC is mainly configured to transfer input data in the external memory DDR to the unified memory 1406, or transfer weight data to the weight memory 1402, or transfer input data to the input memory 1401.

A vector calculation unit 1407 includes a plurality of operation processing units; and if necessary, performs further processing such as vector multiplication, vector addition, an exponential operation, a logarithmic operation, or value comparison on an output of the operation circuit. The vector calculation unit is mainly used for non-convolutional/fully-connected layer network computation in a neural network, such as batch normalization (batch normalization), pixel-level summation, and upsampling on a feature map.

In some implementations, the vector calculation unit 1407 can store a processed output vector in the unified memory 1406. For example, the vector calculation unit 1407 may apply a linear function and/or a non-linear function to the output of the operation circuit 1403, for example, perform linear interpolation on a feature map extracted at a convolutional layer, and for another example, accumulate vectors of values to generate an activation value. In some implementations, the vector calculation unit 1407 generates a normalized value, a value obtained through pixel-level summation, or a combination thereof. In some implementations, the processed output vector can be used as an activation input to the operation circuit 1403. For example, the processed output vector can be used at a subsequent layer in the neural network.

The instruction fetch buffer (instruction fetch buffer) 1409 connected to the controller 1404 is configured to store instructions used by the controller 1404.

The unified memory 1406, the input memory 1401, the weight memory 1402, and the instruction fetch buffer 1409 are all on-chip memories. The external memory is private to a hardware architecture of the NPU.

An operation at each layer in a recurrent neural network may be performed by the operation circuit 1403 or the vector calculation unit 1407.

The processor mentioned anywhere above may be a general-purpose central processing unit, a microprocessor, an ASIC, or one or more integrated circuits that are configured to control program execution of the method according to the first aspect.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to actual requirements to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or certainly may be implemented by dedicated hardware, including an application-specific integrated circuit, a dedicated CLU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a server, or a network device) to perform the methods described in embodiments of this application.

All or some of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Disk, SSD)), or the like.

## Claims

1. A navigation method, comprising:

   obtaining a driving image and a pose of a vehicle at a first moment, and a standard definition map used for navigation;
   mapping a target element and a vector direction of a road on the standard definition map into a vehicle body coordinate system of the vehicle, wherein the target element comprises a lane line or a road edge in the driving image; and
   constructing a lane-level navigation map at the first moment based on the vector direction of the road, the target element, the pose of the vehicle at the first moment, and a pose of the vehicle at a second moment, wherein the second moment is earlier than the first moment, and the lane-level navigation map is used to provide a lane-level navigation service for a user.

2. The method according to claim 1, wherein the constructing a lane-level navigation map at the first moment based on the vector direction of the road, the target element, the pose of the vehicle at the first moment, and a pose of the vehicle at a second moment comprises:
   constructing the lane-level navigation map at the first moment based on a lane-level navigation map at the second moment and a frame estimation result at the first moment, wherein the frame estimation result at the first moment indicates a confidence of the driving image at the first moment.

3. The method according to claim 2, wherein the frame estimation result at the first moment is obtained according to a target relational expression, and the target relational expression comprises a product of a first weight and the vector direction of the road, a product of a second weight and inter-frame motion information, and a product result of a third weight and a parameter value of the target element.

4. The method according to claim 3, wherein the inter-frame motion information is a result obtained by projecting a frame estimation result at the second moment to the first moment based on a variation between the pose of the vehicle at the first moment and the pose of the vehicle at the second moment.

5. The method according to claim 3 or 4, wherein before the constructing a lane-level navigation map at the first moment, the method further comprises:
   updating at least one of the first weight, the second weight, or the third weight based on an error estimation result, wherein the error estimation result is a difference estimation result between the target element in the driving image at the first moment and the target element in a driving image at the second moment, or the error estimation result is a difference estimation result between the frame estimation result at the first moment and the frame estimation result at the second moment.

6.  The method according to claim 5, wherein the third weight is reduced if the error estimation result indicates that a similarity between the target element in the driving image at the first moment and the target element in the driving image at the second moment is less than a first threshold.

7.  The method according to claim 5, wherein the third weight is increased if the error estimation result indicates that a similarity between the frame estimation result at the first moment and the frame estimation result at the second moment is less than a second threshold.

8.  The method according to any one of claims 2 to 7, wherein the method further comprises:
    correcting, based on the frame estimation result at the first moment and an orientation parameter and a width of a lane in which the vehicle is located, a location parameter of a lane line of another lane in the same orientation on the lane-level navigation map at the first moment.

9.  The method according to any one of claims 1 to 8, wherein the method further comprises:
    performing semantic merging based on the lane in which the vehicle is located on the lane-level navigation map at the first moment and navigation information input by the user on the standard definition map, to output a lane-level navigation guidance prompt, wherein the lane-level navigation guidance prompt comprises lane keeping, lane changing to the left, or lane changing to the right.

10. The method according to claim 9, wherein
    the lane-level navigation guidance prompt is lane keeping if it is determined, based on the lane in which the vehicle is located and the navigation information, that the vehicle needs to keep going straight, that the vehicle is already located on a leftmost lane in a scenario in which the vehicle needs to make a U-turn or turn left, or that the vehicle is already located on a rightmost lane in a scenario in which the vehicle needs to turn right.

11. The method according to claim 9, wherein
    the lane-level navigation guidance prompt is lane changing to the left, or lane changing to the right if it is determined, based on the lane in which the vehicle is located and the navigation information, that the vehicle needs to make a lane change.

12. The method according to any one of claims 9 to 11, wherein the method further comprises:
    when the lane in which the vehicle is located cannot be determined based on the driving image at the first moment, determining, based on a lane in which the vehicle is located in a driving image at a third moment and a driving behavior from the third moment to the first moment, the lane in which the vehicle is located at the first moment, wherein the third moment is earlier than the first moment, a distance between the third moment and the first moment is less than a third threshold, and a frame estimation result at the third moment is an estimation result with highest reliability in driving images generated from the third moment to the first moment.

13. The method according to any one of claims 1 to 12, wherein the method further comprises:
    in a navigation process, adjusting, based on multi-dimensional parameters, a pose of a virtual arrow used to indicate a navigation direction, wherein the multi-dimensional parameters comprise at least two of an orientation angle, a roll angle, a vehicle system horizontal offset, or a vehicle system vertical offset.

14. The method according to claim 13, wherein in the navigation process, the orientation of the virtual arrow is consistent with the orientation of the lane.

15. A navigation method, comprising:

    responding to a tap operation of a user on a first button on a standard definition map used for navigation, and starting a camera, wherein the camera is configured to shoot a driving image, and the first button is an entry used to start a lane-level navigation service;
    mapping a target element and a vector direction of a road on the standard definition map into a vehicle body coordinate system of the vehicle, wherein the target element comprises a lane line or a road edge in a driving image at a first moment;

constructing a lane-level navigation map at the first moment based on the vector direction of the road, the target element, a pose of the vehicle at the first moment, and a pose of the vehicle at a second moment, wherein the second moment is earlier than the first moment; and

displaying the lane-level navigation map, wherein the lane-level navigation map is used to provide the lane-level navigation service for the user.

16. The method according to claim 15, wherein the method further comprises:

responding to a switch operation of the user on a view angle button on the lane-level navigation map, and switching from a lane-level navigation map of a first view angle to a lane-level navigation map of a second view angle, wherein the first view angle comprises a top view angle of the vehicle or a front view angle of the vehicle, the second view angle comprises the front view angle of the vehicle or the top view angle of the vehicle, and the first view angle is different from the second view angle.

17. The method according to claim 15 or 16, wherein the method further comprises:

responding to a switch operation of the user on a navigation guidance mode on the lane-level navigation map, and switching from a first navigation guidance mode to a second navigation guidance mode, wherein the first navigation guidance mode comprises a mode of enhancing lane rendering of a travel lane or a mode of rendering a guide arrow on a travel lane, and the first navigation guidance mode is different from the second navigation guidance mode.

18. The method according to any one of claims 15 to 17, wherein the method further comprises:

responding to a control operation of the user on an information button on the lane-level navigation map, and closing a navigation guidance prompt on the lane-level navigation map, or displaying a navigation guidance prompt on the lane-level navigation map, wherein the navigation guidance prompt comprises lane keeping, lane changing to the left, lane changing to the right, an intersection indication, or an alarm indication.

19. A client, comprising a transceiver, a processor, and a memory, wherein the transceiver and the processor are coupled to the memory, the memory is configured to store a program or instructions, and when the program or the instructions are executed by the processor, the client is enabled to perform the method according to any one of claims 1 to 14 or any one of claims 15 to 18.

20. A computer-readable storage medium, wherein the computer-readable storage medium stores instructions, and when the instructions are run on a computer device, the computer device is enabled to perform the method according to any one of claims 1 to 14 or any one of claims 15 to 18.

21. A computer program product, wherein the computer program product comprises computer program code, and when the computer program code is run on a computer device, the computer device is enabled to perform the method according to any one of claims 1 to 14 or any one of claims 15 to 18.

22. A chip system, wherein the chip system comprises one or more interface circuits and one or more processors; the interface circuit is interconnected to the processor through a line; the interface circuit is configured to: receive a signal from a memory of a client, and send the signal to the processor, wherein the signal comprises computer instructions stored in the memory; and when the processor executes the computer instructions, the client performs the method according to any one of claims 1 to 14 or any one of claims 15 to 18.

23. A vehicle, comprising a camera, a sensor, and a vehicle-mounted terminal, wherein the vehicle-mounted terminal is communicatively connected to the camera and the sensor;

the camera is configured to shoot a driving image;

the sensor is configured to collect data related to a pose of the vehicle; and

the vehicle-mounted terminal comprises the client according to claim 19 or the chip system according to claim 22.

**Vehicle 100**

Infotainment system 110
- Communication system 111
- Entertainment system 112
- Navigation system 113

Sensing system 120
- Global positioning system 121
- Inertial measurement unit 122
- Lidar 123
- Millimeter-wave radar 124
- Ultrasonic radar 125
- Camera apparatus 126

Decision control system 130
- Computing system 131
- Vehicle controller 132
- Steering system 133
- Throttle 134
- Braking system 135

Drive system 140
- Engine 141
- Energy source 142
- Transmission system 143
- Wheels 144

Computing platform 150
- Processor 151
- Memory 152
  - Instructions 153

FIG. 1

FIG. 2

Obtain a driving image and a pose of a vehicle at a first moment, and a standard definition map used for navigation — 301

Map a target element and a vector direction of a road on the standard definition map into a vehicle body coordinate system of the vehicle, where the target element includes a lane line or a road edge in the driving image — 302

Construct a lane-level navigation map at the first moment based on the vector direction of the road, the target element, the pose of the vehicle at the first moment, and a pose of the vehicle at a second moment, where the second moment is earlier than the first moment, and the lane-level navigation map is used to provide a lane-level navigation service for a user — 303

FIG. 3

Global coordinate system map

FIG. 4A

FIG. 4B

FIG. 4C

FIG. 4D

FIG. 4E

FIG. 4F

FIG. 4G

FIG. 5A

FIG. 5B

72 km/h

300m
Inner road

FIG. 6A

FIG. 6B

FIG. 6C

FIG. 6D

t+1

t

FIG. 7

FIG. 8A

FIG. 8B

Start

GNSS/IMU/WSS data — 901

Driving image — 903

SD map

VDR — 902

Target element — 904

IPM — 905

Heterogeneous data fusion — 906

EKF filtering — 907

Lane-level semantic merging — 911

Local lane-level map — 908

Weight update — 910

Predict a historical trajectory — 912

Error estimation — 909

Lane-level navigation guidance — 913

FIG. 9A

Local lane-level
navigation map

Yes | Aligned with an SD map or not? ⌐ 921 | No

Merge lane attributes ⌐ 922

Query historical data ⌐ 927

Predict a trajectory ⌐ 928

Yes | Semantic alignment ⌐ 923 | No

Lane keeping ⌐ 924

Lane change guidance ⌐ 925

Traffic regulation check ⌐ 926

FIG. 9B

Respond to a tap operation of a user on a first button on a standard definition map used for navigation, and start a camera, where the camera is configured to shoot a driving image, and the first button is an entry used to start a lane-level navigation service — 1001

Map a target element and a vector direction of a road on the standard definition map into a vehicle body coordinate system of a vehicle, where the target element includes a lane line or a road edge in a driving image at a first moment — 1002

Construct a lane-level navigation map at the first moment based on the vector direction of the road, the target element, a pose of the vehicle at the first moment, and a pose of the vehicle at a second moment, where the second moment is earlier than the first moment — 1003

Display the lane-level navigation map, where the lane-level navigation map is used to provide the lane-level navigation service for the user — 1004

FIG. 10A

FIG. 10B

FIG. 11

1200

Navigation apparatus

1201

First
processing
unit

1202

Second
processing
unit

1203

Third
processing
unit

1204

Display unit

FIG. 12

FIG. 13

Weight memory 1402

Operation circuit 1403

Accumulator 1408

Controller 1404

Instruction fetch buffer 1409

Input memory 1401

Vector calculation unit 1407

Unified memory 1406

Direct memory access controller 1405

Bus interface unit 1410

Neural network processing unit 140

Host CPU

External memory

FIG. 14

## INTERNATIONAL SEARCH REPORT

| International application No. |
| --- |
| **PCT/CN2022/129294** |

| A. | CLASSIFICATION OF SUBJECT MATTER |
| --- | --- |

G01C21/34(2006.01)i

According to International Patent Classification (IPC) or to both national classification and IPC

| B. | FIELDS SEARCHED |
| --- | --- |

Minimum documentation searched (classification system followed by classification symbols)

IPC:G01C,G08G

Documentation searched other than minimum documentation to the extent that such documents are included in the fields searched

Electronic data base consulted during the international search (name of data base and, where practicable, search terms used)

CNTXT, CNKI, DWPI, ENTXT: 车道, 导航, 位姿, 位置, 姿态, 地图, 构建, 方向, 指向, 矢量, 时刻, 时序, 序列, lane?, navigat +, guid+, position+, attitude, map+, vector?, direction?, heading, sequence?, serial?

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 108955702 A (XI'AN JIAOTONG UNIVERSITY) 07 December 2018 (2018-12-07) description, paragraphs [0038]-[0054], and figure 1 | 1-23 |
| A | CN 111311902 A (ALIBABA GROUP HOLDING LIMITED) 19 June 2020 (2020-06-19) entire document | 1-23 |
| A | CN 112673233 A (BEIJING DIDI INFINITY TECHNOLOGY AND DEVELOPMENT CO., LTD.) 16 April 2021 (2021-04-16) entire document | 1-23 |
| A | CN 113390407 A (BEIJING BAIDU NETCOM SCIENCE AND TECHNOLOGY CO., LTD.) 14 September 2021 (2021-09-14) entire document | 1-23 |
| A | CN 114396957 A (CHONGQING CHANG'AN AUTOMOBILE CO., LTD.) 26 April 2022 (2022-04-26) entire document | 1-23 |
| A | CN 115164918 A (LIANYOU ZHILIAN TECHNOLOGY CO., LTD.) 11 October 2022 (2022-10-11) entire document | 1-23 |

| ✓ Further documents are listed in the continuation of Box C. | ✓ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **04 July 2023** | **18 July 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2022/129294**

| C. | DOCUMENTS CONSIDERED TO BE RELEVANT | |
|---|---|---|
| Category* | Citation of document, with indication, where appropriate, of the relevant passages | Relevant to claim No. |
| A | US 2022074758 A1 (HERE GLOBAL B.V.) 10 March 2022 (2022-03-10)<br>entire document | 1-23 |

Form PCT/ISA/210 (second sheet) (July 2022)

**INTERNATIONAL SEARCH REPORT**
Information on patent family members

International application No.

**PCT/CN2022/129294**

| Patent document cited in search report | | | Publication date (day/month/year) | Patent family member(s) | | | Publication date (day/month/year) |
|---|---|---|---|---|---|---|---|
| CN | 108955702 | A | 07 December 2018 | None | | | |
| CN | 111311902 | A | 19 June 2020 | TW | 202033932 | A | 16 September 2020 |
| | | | | WO | 2020119567 | A1 | 18 June 2020 |
| CN | 112673233 | A | 16 April 2021 | None | | | |
| CN | 113390407 | A | 14 September 2021 | None | | | |
| CN | 114396957 | A | 26 April 2022 | None | | | |
| CN | 115164918 | A | 11 October 2022 | None | | | |
| US | 2022074758 | A1 | 10 March 2022 | None | | | |

Form PCT/ISA/210 (patent family annex) (July 2022)